# EUROPEAN PATENT APPLICATION

(11) **EP 4 832 453 A1**
(43) Date of publication of application: **28.10.2026**
(21) Application number: 25741630.5
(22) Date of filing: 17.01.2025
(51) Int. Cl.: H04L 67/10

(54) **VECTOR PROCESSING METHOD BASED ON CLOUD MANAGEMENT PLATFORM, AND CLOUD MANAGEMENT PLATFORM**

(30) Priority: 18.01.2024 CN 202410077190; 30.04.2024 CN 202410543817
(71) Applicant: Huawei Cloud Computing Technologies Co., Ltd., Gui'an New District, Guizhou 550025 (CN)
(72) Inventor: ZHONG, Yanhui, Guiyang, Guizhou 550025 (CN); BAI, Pingchang, Guiyang, Guizhou 550025 (CN); WU, Huatao, Guiyang, Guizhou 550025 (CN)
(74) Representative: Goddar, Heinz J.
(86) International application number: PCT/CN2025/073036
(87) International publication number: WO 2025/153068

(57) **Abstract**

This application discloses a vector processing method based on a cloud management platform and a cloud management platform, enabling global sharing of resources among a plurality of compute nodes, thereby improving resource utilization and reducing costs to some extent. The method in this application includes: After the cloud management platform receives a vector processing request triggered by a tenant, the cloud management platform obtains, based on the vector processing request, status information of a plurality of compute nodes that serve the tenant. After obtaining the status information of the plurality of compute nodes, the cloud management platform analyzes the statuses of the plurality of compute nodes based on the statuses of the plurality of compute nodes, to select, from the plurality of compute nodes, a compute node in an optimal state as a first compute node, and sends the vector processing request to the first compute node. After obtaining the vector processing request, the first compute node executes the vector processing request to complete vector processing.

## Description

This application claims priorities to Chinese Patent Application No. 202410077190.0, filed with the China National Intellectual Property Administration on January 18, 2024 and entitled "TASK SCHEDULING METHOD AND APPARATUS, AND ANOTHER DEVICE", and to Chinese Patent Application No. 202410543817.7, filed with the China National Intellectual Property Administration on April 30, 2024 and entitled "VECTOR PROCESSING METHOD BASED ON CLOUD MANAGEMENT PLATFORM AND CLOUD MANAGEMENT PLATFORM", both of which are incorporated herein by reference in their entireties.

### TECHNICAL FIELD

Embodiments of this application relate to the field of cloud technologies, and in particular, to a vector processing method based on a cloud management platform and a cloud management platform.

### BACKGROUND

With the rapid development of cloud technologies, an increasing quantity of tenants choose to store unstructured data of the tenants in the form of vector representations in cloud service systems provided by cloud vendors. This allows tenants to access and query vectors at any time, thereby meeting their vector processing requirements.

In related technologies, a cloud service system built on a decoupled storage and compute architecture may include a plurality of compute nodes and a plurality of storage nodes. The plurality of compute nodes are classified into different types based on their functions. For example, a compute node with a vector generation function may convert unstructured data of a tenant into vectors and store the vectors in storage nodes. For another example, a compute node with a vector query function may search storage nodes for corresponding vectors based on a request of the tenant and return the vectors to the tenant.

In such systems, because the plurality of compute nodes are classified into different types, a compute node of a specific type can complete vector processing tasks of that type. Consequently, resources of the plurality of compute nodes cannot be shared, leading to resource waste and excessively high overall costs of the system.

### SUMMARY

Embodiments of this application provide a vector processing method based on a cloud management platform and a cloud management platform, enabling global sharing of resources among a plurality of compute nodes, thereby improving resource utilization and reducing costs to some extent.

A first aspect of embodiments of this application provides a vector processing method based on a cloud management platform. A cloud management platform used to implement the method may manage an infrastructure that provides a cloud service for a tenant, the infrastructure includes a plurality of compute nodes and a plurality of storage nodes that serve the tenant, the plurality of storage nodes are configured to store a plurality of data items of the tenant, and the method includes:

After the cloud management platform receives a vector processing request triggered by the tenant, the cloud management platform obtains, based on the vector processing request, status information of the plurality of compute nodes that serve the tenant.

After obtaining the status information of the plurality of compute nodes, the cloud management platform analyzes the status information of the plurality of compute nodes by using a load balancing algorithm, to select, from the plurality of compute nodes, a compute node in an optimal state (that is, having the lowest load) as a first compute node. It should be noted that, for any compute node in the plurality of compute nodes, the compute node is configured with a capability of processing the vector processing request. In other words, even if the vector processing request is any one of a vector generation request, a vector query request, a vector addition request, and a vector deletion request, the compute node may execute the vector processing request.

After determining the first compute node, the cloud management platform sends the vector processing request to the first compute node, so that the first compute node may execute the vector processing request, to complete vector processing.

For example, when the vector processing request is a vector generation request for a plurality of data items from the tenant, the first compute node may obtain the plurality of data items from the plurality of storage nodes, to generate a plurality of vectors corresponding to the plurality of data items, and to store the plurality of vectors in the plurality of storage nodes, so as to meet a vector generation requirement of the tenant.

For another example, when the vector processing request is a vector query request for a first vector from the tenant, the first compute node may obtain, from a second vector stored in the first compute node or from the plurality of vectors stored in the plurality of storage nodes, a third vector matching the first vector. The plurality of vectors stored in the plurality of storage nodes include the second vector stored in the first compute node, thereby meeting a vector query requirement of the tenant.

For another example, when the vector processing request is a vector addition request for first data, the first compute node may obtain the first data from the plurality of storage nodes, to generate a fourth vector corresponding to the first data, and store the fourth vector in the plurality of storage nodes. The first data is new data written by the tenant into the plurality of storage nodes.

For another example, when the vector processing request is a vector deletion request for second data, the first compute node may delete, from the plurality of vectors stored in the plurality of storage nodes, a fifth vector corresponding to the second data. The second data is data deleted by the tenant from the plurality of data items stored in the plurality of storage nodes.

It can be learned from the foregoing method that: for the vector processing request triggered by the tenant, the cloud management platform may obtain the status information of the compute nodes that serve the tenant, and select, based on the status information, the compute node in the optimal state from the plurality of compute nodes to execute the vector processing request. Regardless of whether the vector processing request is any one of the vector generation request, the vector query request, the vector addition request, or the vector deletion request, from a perspective of the cloud management platform, functions of the plurality of compute nodes are the same, and each compute node may execute the vector processing request. Therefore, the cloud management platform may select the compute node in the optimal state from the plurality of compute nodes, to invoke the compute node to execute the vector processing request. It can be learned that, because the cloud management platform has a task scheduling function for the plurality of compute nodes, each compute node may execute various types of vector processing requests, enabling global sharing of resources among the plurality of compute nodes, thereby improving resource utilization and reducing costs of the cloud service system to some extent.

In a possible implementation, the vector addition request or the vector deletion request originates from the plurality of storage nodes. In the foregoing implementation, after the tenant writes the first data into the plurality of storage nodes, the plurality of storage nodes may generate the vector addition request for the first data, and send the vector addition request to the cloud management platform, so that the cloud management platform invokes the first compute node to execute the vector addition request, thereby automatically completing a vector addition requirement. Similarly, after the tenant deletes the first data from the plurality of storage nodes, the plurality of storage nodes may generate the vector deletion request for the second data, and send the vector deletion request to the cloud management platform, so that the cloud management platform invokes the first compute node to execute the vector deletion request, thereby automatically completing a vector deletion requirement. It can be learned that the vector addition request and the vector deletion request may be generated and processed by the cloud management platform, the compute node, and the storage node, and the tenant does not need to send a request to the cloud management platform, thereby reducing an operation amount of the tenant and improving experience of the tenant.

In a possible implementation, the vector generation request indicates: the first compute node to partition the plurality of vectors into a plurality of vector groups, where a quantity of vectors included in each vector group is equal to a preset value; and the first compute node to write, in units of a vector group, the plurality of vector groups into the plurality of storage nodes respectively. In the foregoing implementation, because there are a plurality of data items of the tenant, the first compute node may generate a vector corresponding to a first piece of data in the plurality of data items, store the vector, then generate a vector corresponding to a second piece of data, store the vector, and the like. When a quantity of vectors stored in the first compute node is equal to the preset value, the first compute node may partition the stored vectors into a vector group, and store the vector group in a storage node in an object storage pool. The foregoing operations are repeatedly performed. The first compute node may convert a plurality of data items into corresponding vectors, and partition the plurality of vectors into a plurality of vector groups and store the plurality of vector groups in the object storage pool. This meets a vector generation requirement of the tenant.

In a possible implementation, the second vector is stored in the first compute node in the form of a first vector group, and the vector generation request indicates: the first compute node, after obtaining the plurality of vector groups, to select the first vector group from the plurality of vector groups, and to store the first vector group; and the first compute node to notify the cloud management platform that the first compute node stores the first vector group. In the foregoing implementation, in a process of obtaining the plurality of vector groups, the first compute node may select a vector group that needs to be stored, namely, the first vector group, and store the first vector group. The first compute node may report, to the cloud management platform, that the first compute node stores the first vector group, so that the cloud management platform records a vector storage status of the first compute node, to subsequently obtain status information of the first compute node, and accurately evaluate a status of the first compute node.

In a possible implementation, the second vector is stored in the first compute node in the form of a first vector group, and the vector query request indicates: the first compute node to detect whether the third vector matching the first vector exists in the first vector group; and the first compute node, if the third vector exists in the first vector group, to obtain the third vector from the first vector group; or the first compute node, if the third vector does not exist in the first vector group, to obtain, from the plurality of storage nodes, a second vector group other than the first vector group in a plurality of vector groups, and to obtain the third vector from the second vector group, where the plurality of vector groups are obtained by partitioning the plurality of vectors. In the foregoing implementation, when the tenant needs to query the first vector, the first compute node may first detect whether the third vector matching the first vector exists in the first vector group stored in the first compute node. If the third vector exists, the first compute node may obtain the third vector from the first vector group stored in the first compute node, and return the third vector to the tenant. If the third vector does not exist, the first compute node may obtain the second vector group other than the first vector group from the plurality of storage nodes, obtain the third vector from the second vector group, and return the third vector to the tenant. In this way, a vector query requirement of the tenant is met.

In a possible implementation, the second vector is stored in the first compute node in the form of the first vector group, and the vector query request further indicates: the first compute node to determine, from the second vector group, a third vector group in which the third vector is located, and to update the first vector group based on the third vector group to obtain an updated first vector group, where the updated first vector group includes the third vector group; and the first compute node to notify the cloud management platform that the first compute node stores the updated first vector group. In the foregoing implementation, because the first compute node does not store the third vector group in which the third vector is located, when the first compute node determines that the first compute node needs to store the third vector group, the first compute node may replace a vector group in the first vector group with the third vector group, to obtain the updated first vector group, and notify the cloud management platform that the first compute node stores the updated first vector group, so that the cloud management platform updates the latest vector storage status of the first compute node, to subsequently obtain the status information of the first compute node, and accurately evaluate the status of the first compute node.

In a possible implementation, the vector addition request indicates: the first compute node to generate the fourth vector corresponding to the first data, and to store the fourth vector; and the first compute node, if a quantity of vectors that are stored in the first compute node and are not partitioned into a vector group is equal to a preset value, to partition the vectors that are not partitioned into the vector group into a fourth vector group, and to write the fourth vector group into the plurality of storage nodes, where the vectors that are not partitioned into the vector group include the fourth vector. In the foregoing implementation, when the fourth vector corresponding to the first data needs to be added, the first compute node may first obtain the first data from the plurality of storage nodes, generate the fourth vector corresponding to the first data, and then store the fourth vector. Then, the first compute node may determine whether the quantity of vectors (including the fourth vector) that are stored in the first compute node and that are not partitioned into the vector group is equal to the preset value. If yes, the first compute node partitions these vectors into the fourth vector group, and writes the fourth vector group into the plurality of storage nodes, to complete vector addition.

In a possible implementation, the second vector is stored in the first compute node in the form of a first vector group, and the vector addition request further indicates: the first compute node to update the first vector group based on the fourth vector group to obtain an updated first vector group, where the updated first vector group includes the fourth vector group; and the first compute node to notify the cloud management platform that the first compute node stores the updated first vector group. In the foregoing implementation, because the first compute node does not store the newly generated fourth vector group, when the first compute node determines that the first compute node needs to store the fourth vector group, the first compute node may replace a vector group in the first vector group with the fourth vector group, to obtain the updated first vector group, and notify the cloud management platform that the first compute node stores the updated first vector group, so that the cloud management platform updates the latest vector storage status of the first compute node, to subsequently obtain the status information of the first compute node, and accurately evaluate the status of the first compute node.

In a possible implementation, the plurality of vectors are stored in the plurality of storage nodes in the form of a plurality of vector groups, and the vector deletion request indicates: the first compute node to obtain, from the plurality of vector groups stored in the plurality of storage nodes, a fifth vector group in which the fifth vector corresponding to the second data is located, and to delete the fifth vector group from the plurality of vector groups stored in the plurality of storage nodes; and the first compute node to generate a sixth vector group based on a sixth vector other than the fifth vector in the fifth vector group, and to store the sixth vector group in the plurality of storage nodes. In the foregoing implementation, when the fifth vector corresponding to the second data needs to be deleted, the first compute node may first determine, from the plurality of vector groups stored in the plurality of storage nodes, the fifth vector group in which the fifth vector is located, and delete the fifth vector group. In addition, the first compute node may further generate a sixth vector group based on a sixth vector other than the fifth vector in the fifth vector group, and write the sixth vector group into the plurality of storage nodes, to complete vector deletion and recycling.

In a possible implementation, the vector deletion request further indicates: the first compute node to update the first vector group based on the sixth vector group to obtain an updated first vector group, where the updated first vector group includes the sixth vector group; and the first compute node to notify the cloud management platform that the first compute node stores the updated first vector group. In the foregoing implementation, because the first compute node does not store the newly generated sixth vector group, when the first compute node determines that the first compute node needs to store the sixth vector group, the first compute node may replace a vector group in the first vector group with the sixth vector group, to obtain the updated first vector group, and notify the cloud management platform that the first compute node stores the updated first vector group, so that the cloud management platform updates the latest vector storage status of the first compute node, to subsequently obtain the status information of the first compute node, and accurately evaluate the status of the first compute node.

In a possible implementation, that the cloud management platform determines, based on the vector generation request and the status information of the plurality of compute nodes, the first compute node with the lowest load from the plurality of compute nodes according to the load balancing algorithm includes: The cloud management platform calculates, based on the vector processing request and according to the load balancing algorithm, the status information of the plurality of compute nodes, to obtain evaluation values of the plurality of compute nodes, where the evaluation values of the plurality of compute nodes indicate load of the plurality of compute nodes; and the cloud management platform determines, from the plurality of compute nodes, a compute node with a smallest evaluation value as the first compute node. For any compute node in the plurality of compute nodes, the status information of the compute node includes at least one of the following: time required for the compute node to load a vector stored in the compute node, time required for the compute node to load an index of the vector stored in the compute node, time required for the compute node to load vectors stored in the plurality of storage nodes, time required for the compute node to load indexes of the vectors stored in the plurality of storage nodes, and time required for the compute node to execute the vector processing request. In the foregoing implementation, for any compute node in the plurality of compute nodes, the cloud management platform may calculate, according to the load balancing algorithm, the status information of the compute node such as the time required for the compute node to load the vector stored in the compute node, the time required for the compute node to load the index of the vector stored in the compute node, the time required for the compute node to load the vectors stored in the plurality of storage nodes, the time required for the compute node to load the indexes of the vectors stored in the plurality of storage nodes, and the time required for the compute node to execute the vector processing request, to obtain the evaluation value of the compute node. The same applies to another compute node. Therefore, the cloud management platform may obtain the evaluation values of the plurality of compute nodes. Because a smaller evaluation value indicates a better status of the compute node (that is, load of the compute node is lower), the cloud management platform may select a compute node with a smallest evaluation value as the first compute node, to efficiently execute the vector processing request.

In a possible implementation, the method further includes at least one of the following: The cloud management platform analyzes the vector stored in the compute node and the vectors stored in the plurality of storage nodes to obtain the time required for the compute node to load the vector stored in the compute node and the time required for the compute node to load the vectors stored in the plurality of storage nodes; the cloud management platform analyzes the index of the vector stored in the compute node and the indexes of the vectors stored in the plurality of storage nodes to obtain the time required for the compute node to load the index stored in the compute node and the time required for the compute node to load the indexes stored in the plurality of storage nodes; and the cloud management platform analyzes resource usage of the compute node to obtain the time required for the compute node to execute the vector processing request. In the foregoing implementation, the cloud management platform has a vector status table, a vector index status table, and a compute node status table. The vector status table records vectors stored in the compute nodes, the vector index status table records indexes of the vectors stored in the compute nodes, and the compute node status table records resource usage statues of the compute nodes. Therefore, the cloud management platform may perform analysis based on the three tables, to accurately obtain status information of the compute nodes, and accurately evaluate the compute nodes.

A second aspect of embodiments of this application provides a cloud management platform. The cloud management platform is configured to manage an infrastructure that provides a cloud service, the infrastructure includes a plurality of compute nodes and a plurality of storage nodes, the plurality of storage nodes are configured to store a plurality of data items of a tenant, and the cloud management platform includes: a receiving module, configured to receive a vector generation request for the plurality of data items from the tenant; and a processing module, configured to determine, based on the vector generation request and status information of the plurality of compute nodes, a first compute node with the lowest load from the plurality of compute nodes according to a load balancing algorithm, where each of the plurality of compute nodes is configured with a capability of processing the vector generation request; and the processing module is further configured to send the vector generation request to the first compute node, where the vector generation request indicates the first compute node to generate a plurality of vectors corresponding to the plurality of data items, and to store the plurality of vectors in the plurality of storage nodes.

In a possible implementation, the receiving module is further configured to receive a vector query request for a first vector from the tenant; the processing module is further configured to determine, based on the vector query request and the status information of the plurality of compute nodes, the first compute node with the lowest load from the plurality of compute nodes according to the load balancing algorithm, where each of the plurality of compute nodes is configured with a capability of processing the vector query request; and the processing module is further configured to send the vector query request to the first compute node, where the vector query request indicates the first compute node to obtain, from a second vector stored in the first compute node or from the plurality of vectors stored in the plurality of storage nodes, a third vector matching the first vector, and the plurality of vectors include the second vector.

In a possible implementation, the receiving module is further configured to receive a vector addition request for first data, where the first data is new data written by the tenant into the plurality of storage nodes; the processing module is further configured to determine, based on the vector addition request and the status information of the plurality of compute nodes, the first compute node with the lowest load from the plurality of compute nodes according to the load balancing algorithm, where each of the plurality of compute nodes is configured with a capability of processing the vector addition request; and the processing module is further configured to send the vector addition request to the first compute node, where the vector addition request indicates the first compute node to generate a fourth vector corresponding to the first data, and to store the fourth vector in the plurality of storage nodes.

In a possible implementation, the receiving module is further configured to receive a vector deletion request for second data, where the second data is data deleted by the tenant from the plurality of data items stored in the plurality of storage nodes; the processing module is further configured to determine, based on the vector deletion request and the status information of the plurality of compute nodes, the first compute node with the lowest load from the plurality of compute nodes according to the load balancing algorithm, where each of the plurality of compute nodes is configured with a capability of processing the vector deletion request; and the processing module is further configured to send the vector deletion request to the first compute node, where the vector deletion request indicates the first compute node to delete, from the plurality of vectors stored in the plurality of storage nodes, a fifth vector corresponding to the second data.

In a possible implementation, the vector addition request or the vector deletion request originates from the plurality of storage nodes.

In a possible implementation, the vector generation request indicates: the first compute node to partition the plurality of vectors into a plurality of vector groups, where a quantity of vectors included in each vector group is equal to a preset value; and the first compute node to write, in units of a vector group, the plurality of vector groups into the plurality of storage nodes respectively.

In a possible implementation, the second vector is stored in the first compute node in the form of a first vector group, and the vector generation request indicates: the first compute node, after obtaining the plurality of vector groups, to select the first vector group from the plurality of vector groups, and to store the first vector group; and the first compute node to notify the cloud management platform that the first compute node stores the first vector group.

In a possible implementation, the second vector is stored in the first compute node in the form of a first vector group, and the vector query request indicates: the first compute node to detect whether the third vector matching the first vector exists in the first vector group; and the first compute node, if the third vector exists in the first vector group, to obtain the third vector from the first vector group; or the first compute node, if the third vector does not exist in the first vector group, to obtain, from the plurality of storage nodes, a second vector group other than the first vector group in a plurality of vector groups, and to obtain the third vector from the second vector group, where the plurality of vector groups are obtained by partitioning the plurality of vectors.

In a possible implementation, the second vector is stored in the first compute node in the form of the first vector group, and the vector query request further indicates: the first compute node to determine, from the second vector group, a third vector group in which the third vector is located, and to update the first vector group based on the third vector group to obtain an updated first vector group, where the updated first vector group includes the third vector group; and the first compute node to notify the cloud management platform that the first compute node stores the updated first vector group.

In a possible implementation, the vector addition request indicates: the first compute node to generate the fourth vector corresponding to the first data, and to store the fourth vector; and the first compute node, if a quantity of vectors that are stored in the first compute node and are not partitioned into a vector group is equal to a preset value, to partition the vectors that are not partitioned into the vector group into a fourth vector group, and to write the fourth vector group into the plurality of storage nodes, where the vectors that are not partitioned into the vector group include the fourth vector.

In a possible implementation, the second vector is stored in the first compute node in the form of a first vector group, and the vector addition request further indicates: the first compute node to update the first vector group based on the fourth vector group to obtain an updated first vector group, where the updated first vector group includes the fourth vector group; and the first compute node to notify the cloud management platform that the first compute node stores the updated first vector group.

In a possible implementation, the plurality of vectors are stored in the plurality of storage nodes in the form of a plurality of vector groups, and the vector deletion request indicates: the first compute node to obtain, from the plurality of vector groups stored in the plurality of storage nodes, a fifth vector group in which the fifth vector corresponding to the second data is located, and to delete the fifth vector group from the plurality of vector groups stored in the plurality of storage nodes; and the first compute node to generate a sixth vector group based on a sixth vector other than the fifth vector in the fifth vector group, and to store the sixth vector group in the plurality of storage nodes.

In a possible implementation, the vector deletion request further indicates: the first compute node to update the first vector group based on the sixth vector group to obtain an updated first vector group, where the updated first vector group includes the sixth vector group; and the first compute node to notify the cloud management platform that the first compute node stores the updated first vector group.

In a possible implementation, the processing module is configured to: calculate, based on the vector generation request and according to the load balancing algorithm, the status information of the plurality of compute nodes, to obtain evaluation values of the plurality of compute nodes, where the evaluation values of the plurality of compute nodes indicate load of the plurality of compute nodes; and determine, from the plurality of compute nodes, a compute node with a smallest evaluation value as the first compute node. For any compute node in the plurality of compute nodes, the status information of the compute node includes at least one of the following: time required for the compute node to load a vector stored in the compute node, time required for the compute node to load an index of the vector stored in the compute node, time required for the compute node to load vectors stored in the plurality of storage nodes, time required for the compute node to load indexes of the vectors stored in the plurality of storage nodes, and time required for the compute node to execute the vector processing request.

In a possible implementation, the cloud management platform further includes an analysis module. The analysis module is configured to perform at least one of the following: analyzing the vector stored in the compute node and the vectors stored in the plurality of storage nodes to obtain the time required for the compute node to load the vector stored in the compute node and the time required for the compute node to load the vectors stored in the plurality of storage nodes; analyzing the index of the vector stored in the compute node and the indexes of the vectors stored in the plurality of storage nodes to obtain the time required for the compute node to load the index stored in the compute node and the time required for the compute node to load the indexes stored in the plurality of storage nodes; and analyzing resource usage of the compute node to obtain the time required for the compute node to execute the vector processing request.

A third aspect of embodiments of this application provides a compute device cluster. The compute device cluster includes at least one compute device, and each compute device includes a processor and a memory. The memory is configured to store instructions. The processor is configured to enable, according to the instructions, the compute device cluster to perform the method according to any one of the first aspect or the possible implementations of the first aspect.

A fourth aspect of embodiments of this application provides a computer storage medium. The computer storage medium stores one or more instructions. When the instructions are executed by one or more computers, the one or more computers are enabled to perform the method according to any one of the first aspect or the possible implementations of the first aspect.

A fifth aspect of embodiments of this application provides a computer program product. The computer program product stores instructions. When the instructions are executed by a computer, the computer is enabled to perform the method according to any one of the first aspect or the possible implementations of the first aspect.

In embodiments of this application, for a vector processing request triggered by a tenant, a cloud management platform may obtain status information of compute nodes that serve the tenant, and select, based on the status information, a compute node in an optimal state from the plurality of compute nodes to execute the vector processing request. Regardless of whether the vector processing request is any one of a vector generation request, a vector query request, a vector addition request, or a vector deletion request, from a perspective of the cloud management platform, functions of the plurality of compute nodes are the same, and each compute node may execute the vector processing request. Therefore, the cloud management platform may select the compute node in the optimal state from the plurality of compute nodes, to invoke the compute node to execute the vector processing request. It can be learned that, because the cloud management platform has a task scheduling function for the plurality of compute nodes, each compute node may execute various types of vector processing requests, enabling global sharing of resources among the plurality of compute nodes, thereby improving resource utilization and reducing costs of the cloud service system to some extent.

### BRIEF DESCRIPTION OF DRAWINGS

FIG. 1 is a diagram of a structure of a cloud service system according to an embodiment of this application;
FIG. 2 is a schematic flowchart of a vector processing method based on a cloud management platform according to an embodiment of this application;
FIG. 3 is a diagram of another structure of a cloud service system according to an embodiment of this application;
FIG. 4 is another schematic flowchart of a vector processing method based on a cloud management platform according to an embodiment of this application;
FIG. 5 is a diagram of another structure of a cloud service system according to an embodiment of this application;
FIG. 6 is another schematic flowchart of a vector processing method based on a cloud management platform according to an embodiment of this application;
FIG. 7 is a diagram of another structure of a cloud service system according to an embodiment of this application;
FIG. 8 is another schematic flowchart of a vector processing method based on a cloud management platform according to an embodiment of this application;
FIG. 9 is a diagram of another structure of a cloud service system according to an embodiment of this application;
FIG. 10 is a diagram of a structure of a cloud management platform according to an embodiment of this application;
FIG. 11 is a diagram of a structure of a compute device according to an embodiment of this application;
FIG. 12 is a diagram of a structure of a compute device cluster according to an embodiment of this application; and
FIG. 13 is a diagram in which computer devices in a computer cluster are connected through a network according to an embodiment of this application.

### DESCRIPTION OF EMBODIMENTS

Embodiments of this application provide a vector processing method based on a cloud management platform and a cloud management platform, enabling global sharing of resources among a plurality of compute nodes, thereby improving resource utilization and reducing costs to some extent.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

With the rapid development of cloud technologies, an increasing quantity of tenants choose to store unstructured data (for example, images, texts, and voices) of the tenants in the form of vector representation in cloud service systems provided by cloud vendors. This allows tenants to access and query vectors at any time, thereby meeting their vector processing requirements.

In related technologies, a cloud service system built on a decoupled storage and compute architecture may include a plurality of compute nodes and a plurality of storage nodes. The plurality of compute nodes are classified into different types based on their functions. For example, a compute node with a vector generation function may convert unstructured data of a tenant into vectors, and store the vectors in storage nodes. For another example, a compute node with an index generation function may generate indexes of vectors, and store the indexes in storage nodes. For another example, a compute node with a vector query function may search storage nodes for corresponding vectors based on a request of the tenant and return the vectors to the tenant.

In such systems, because the plurality of compute nodes are classified into different types, a compute node of a specific type can complete vector processing tasks of that type, but cannot complete vector processing tasks of another type. For example, the compute node with the vector generation function cannot complete a vector query task. Consequently, resources of the plurality of compute nodes cannot be shared globally. When a large quantity of vector processing tasks of a specific type in the system burst, a part of compute nodes are idle, leading to resource waste and excessively high overall costs of the system.

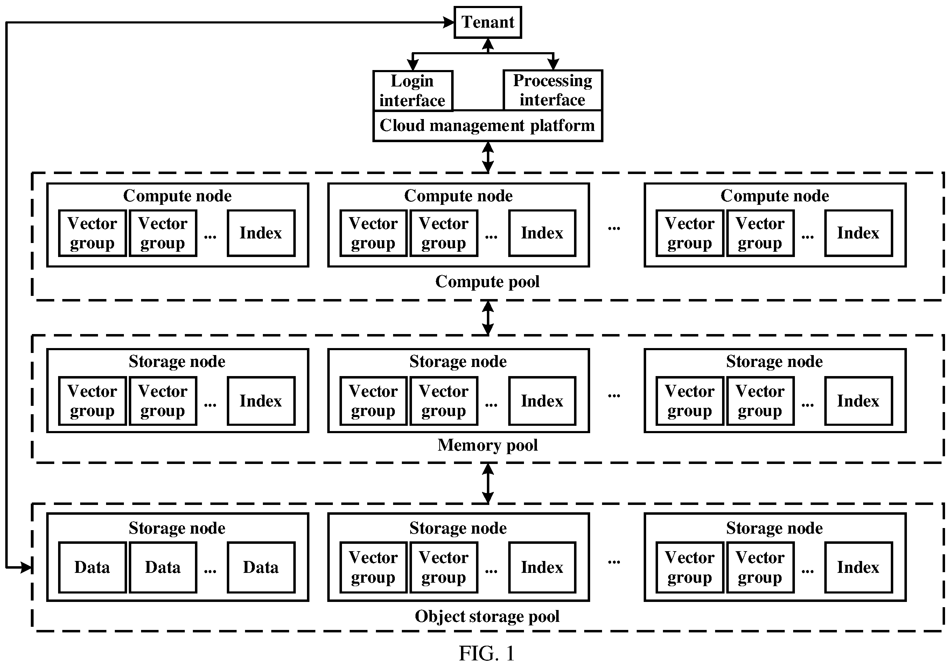

To resolve the foregoing problem, an embodiment of this application provides a vector processing method based on a cloud management platform. The method may be implemented by using a cloud service system. FIG. 1 is a diagram of a structure of a cloud service system according to an embodiment of this application. As shown in FIG. 1, the cloud service system includes an infrastructure that can provide a cloud service and a cloud management platform that manages the infrastructure. The following sections separately describe the cloud management platform and the infrastructure.

The cloud management platform may perform overall management on the infrastructure in the entire cloud service system (for example, in the infrastructure, a plurality of compute nodes and a plurality of storage nodes that serve a tenant are created for the tenant based on an indication of the tenant, and these compute nodes and storage nodes may provide a vector generation service, a vector query service, a vector addition service, a vector deletion service, and the like for the tenant), or may be open to tenants outside the cloud service system and respond to a request of the tenants. For example, the cloud management platform may provide various interfaces such as a login interface and a processing interface for a client of the tenant (for example, a terminal device used by the tenant or a browser on the terminal device) to access. The cloud management platform may perform identity authentication on the client of the tenant through the login interface. After the identity authentication succeeds, the client of the tenant may be allowed to log in to the cloud management platform. For another example, the cloud management platform may further allow, through the processing interface, the client of the tenant to send, to the cloud management platform, a vector generation request of the tenant for a plurality of pieces of (unstructured) data (the plurality of data items have been stored in the plurality of storage nodes that serve the tenant in advance) of the tenant. The cloud management platform may select a compute node from the plurality of compute nodes that serve the tenant, so that the compute node generates, based on the vector generation request, a plurality of vectors corresponding to the plurality of data items of the tenant, and stores the plurality of vectors in the plurality of storage nodes. For another example, the cloud management platform may further allow, through the processing interface, the client of the tenant to send a vector query request of the tenant for a target vector to the cloud management platform, and the cloud management platform may select a compute node from the plurality of compute nodes, so that the compute node processes the vector query request, finds, from several vectors stored in the compute node or the plurality of vectors stored in the plurality of storage nodes, another output vector matching the target vector, and returns the another output vector to the tenant. For another example, the cloud management platform may further allow, through the processing interface, the tenant to write new data into the plurality of storage nodes via the client of the tenant, so that the plurality of storage nodes send a vector addition request for the new data to the cloud management platform. The cloud management platform may select a compute node from the plurality of compute nodes, so that the compute node processes the vector addition request, generates a new vector corresponding to the new data, and stores the new vector in the plurality of storage nodes. For another example, the cloud management platform may further allow, through the processing interface, the tenant to delete, via the client of the tenant, a piece of data from the plurality of data items stored in the plurality of storage nodes, so that the plurality of storage nodes send a vector deletion request for the deleted data to the cloud management platform. The cloud management platform may select a compute node from the plurality of compute nodes, so that the compute node deletes, based on the vector deletion request from the plurality of vectors stored in the plurality of storage nodes, a to-be-deleted vector corresponding to the deleted data, and the like.

The infrastructure includes the plurality of compute nodes and the plurality of storage nodes that serve the tenant. In the plurality of compute nodes, for any compute node, the compute node may include a vector cache (cache) and a vector index cache. The vector cache is configured to store several vectors in a plurality of vectors corresponding to a plurality of data items of the tenant. The several vectors are generally stored in the form of several vector groups (which may also be referred to as vector segments (vector segments)), and each vector group includes at least one vector. The vector index cache is configured to store indexes of the several vector groups, and the indexes of the several vector groups may be used by the compute node to obtain the several vector groups. For the plurality of storage nodes, the plurality of vectors corresponding to the plurality of data items of the tenant may be stored in the plurality of storage nodes in the form of a plurality of vector groups, and each vector group includes at least one of the plurality of vectors. In addition, indexes of the plurality of vector groups are also stored in the plurality of storage nodes. It should be noted that each storage node may store at least one of the plurality of vector groups and a corresponding index (certainly, each storage node may also store the plurality of vector groups and indexes of the plurality of vector groups).

It should be noted that the plurality of storage nodes that serve the tenant may be divided into two parts of storage nodes. One part of the storage nodes forms a memory pool, and the other part of the storage nodes forms an object storage pool. For the storage nodes in the memory pool, these storage nodes may store a part of the plurality of vector groups of the tenant and corresponding indexes. It should be noted that a quantity of vector groups stored in the memory pool is usually greater than a quantity of vector groups stored in any compute node. For the storage nodes in the object storage pool, these storage nodes can store both the plurality of data items of the tenant and a plurality of vector groups corresponding to the plurality of data items and corresponding indexes. In other words, the object storage pool stores all of the vector groups of the tenant, and the compute nodes and the memory pool store a part of the vector groups of the tenant.

It should be noted that the cloud management platform has a task scheduling function. Based on this function, the cloud management platform may record the following data.
(1) Vector status table: The vector status table may record several vector groups stored in each compute node and a plurality of vector groups stored in a plurality of storage nodes. It may be understood that, for any compute node, the vector status table records several vector groups stored in the compute node. Because the several vector groups stored in the compute node are a part of the plurality of vector groups stored in the plurality of storage nodes, the cloud management platform can perform comprehensive analysis on the several vector groups stored in the compute node and remaining vector groups other than the several vector groups stored in the plurality of storage nodes (for example, the compute node stores one part of the plurality of vector groups, but does not store the other part of the plurality of vector groups), to obtain, through calculation, time required for the compute node to load (obtain) the several vector groups stored in the compute node (namely, time required for the compute node to load vectors stored in the compute node), and time required for the compute node to load, from the plurality of storage nodes, the remaining vector groups other than the several vector groups (namely, time required for the compute node to load vectors stored in the plurality of storage nodes). The information may be used as status information of the compute node.

For example, the vector status table is shown as Table 1. It is assumed that compute nodes that serve the tenant include compute nodes such as a compute node 1 and a compute node 2, and there are a plurality of storage nodes that serve the tenant. Based on a requirement of the tenant, vector groups such as a vector group 1, a vector group 2, a vector group 3, a vector group 4, a vector group 5, and a vector group 6 are generated for the tenant and are stored in a plurality of remote storage nodes. In addition, in a subsequent process, the compute node 1 caches vector groups such as the vector group 1, the vector group 2, and the vector group 5, and the compute node 2 caches vector groups such as the vector group 2, the vector group 3, and the vector group 5. Therefore, the cloud management platform may generate the vector group status table shown as Table 1, to record a current vector storage status of each compute node and storage node (the vector storage status is usually reported by each compute node and storage node to the cloud management platform. It should be noted that, in this example, the plurality of storage nodes are considered as a whole, and the vector groups such as the vector group 1 to the vector group 6 may be separately deployed in a same storage node or different storage nodes).

**Table 1**

| Compute nodes | Local vector groups | Remote vector groups |
|---|---|---|
| 1 | Vector group 1, vector group 2, vector group 5, and the like | Vector group 1, vector group 2, vector group 3, vector group 4, vector group 5, vector group 6, and the like |
| 2 | Vector group 2, vector group 3, vector group 5, and the like | |
| ... | ... | |

In this case, based on the vector status table, the cloud management platform may determine time required for the compute node 1 to load the vector groups stored in the compute node 1, such as the vector group 1, the vector group 2, and the vector group 5, and time required for the compute node 1 to load the vector groups stored in the plurality of storage nodes such as the vector group 3, the vector group 4, and the vector group 6. Similarly, the cloud management platform further determines such time for the compute node 2. Details are not described herein again.

(2) Vector index status table: The vector index status table may record indexes of several vector groups stored in each compute node and indexes of a plurality of vector groups stored in a plurality of storage nodes. It may be understood that, for any compute node, the vector index status table records indexes of several vector groups stored in the compute node. Because the indexes of the several vector groups stored in the compute node are a part of the indexes of the plurality of vector groups stored in the plurality of storage nodes, the cloud management platform can perform comprehensive analysis on the indexes of the several vector groups stored in the compute node and indexes of remaining vector groups other than the indexes of the several vector groups stored in the plurality of storage nodes (for example, the compute node stores indexes of one part of the plurality of vector groups, but does not store indexes of the other part of the plurality of vector groups), to obtain, through calculation, time required for the compute node to load the indexes of the several vector groups stored in the compute node (namely, time required for the compute node to load the indexes stored in the compute node), and time required for the compute node to load, from the plurality of storage nodes, the indexes of the remaining vector groups other than the indexes of the several vector groups (namely, time required for the compute node to load indexes stored in the plurality of storage nodes). The information may also be used as status information of the compute node.

Still as shown in the foregoing example, the vector index status table is shown as Table 2. The cloud management platform may further generate the vector index status table shown as Table 2, to record a current vector index storage status of each compute node and storage node (the vector index storage status is generally reported by each compute node and storage node to the cloud management platform).

**Table 2**

| Compute nodes | Indexes of local vector groups | Indexes of remote vector groups |
|---|---|---|
| 1 | Index of the vector group 1, index of the vector group 2, index of the vector group 5, and the like | Index of the vector group 1, index of the vector group 2, index of the vector group 3, index of the vector group 4, index of the vector group 5, index of the vector group 6, and the like |
| 2 | Index of the vector group 2, index of the vector group 3, index of the vector group 5, and the like | |
| ... | ... | |

In this case, based on the vector index status table, the cloud management platform may determine time required for the compute node 1 to load the indexes stored in the compute node 1 such as the index of the vector group 1, the index of the vector group 2, and the index of the vector group 5, and time required for the compute node 1 to load the indexes stored in the plurality of storage nodes such as the index of the vector group 3, the index of the vector group 4, and the index of the vector group 6. Similarly, the cloud management platform further determines such time for the compute node 2. Details are not described herein again.

(3) Compute node status table: The compute node status table may record a quantity of to-be-processed tasks (to-be-processed vector processing requests) of each compute node, a used capacity of a central processing unit (central processing unit, CPU), a used capacity of a memory, and the like. It may be understood that, for any compute node, the compute node status table records data (indicating resource usage of the compute node) such as a quantity of to-be-processed tasks of the compute node, a used capacity of a CPU of the compute node, and a used capacity of a memory of the compute node. Therefore, the cloud management platform may perform analysis based on the data, and obtain, through calculation, time required for the compute node to execute (process) a task (a vector processing request). The information may also be used as status information of the compute node.

Still as shown in the foregoing example, the compute node status table is shown as Table 3. The cloud management platform may further generate the compute node status table shown as Table 3, to record current resource usage of each compute node (the resource usage is generally reported by each compute node to the cloud management platform).

**Table 3**

| Compute nodes | Quantity of to-be-processed tasks | Used capacities of CPUs | Used capacities of memories |
|---|---|---|---|
| 1 | 5 | 80% | 70% |
| 2 | 10 | 30% | 30% |
| ... | ... | ... | ... |

In this case, for a to-be-processed task, the cloud management platform may determine, based on the data such as the quantity of to-be-processed tasks of the compute node 1, the used capacity of the CPU, and the used capacity of the memory in the vector status table, time required for the compute node 1 to execute the to-be-processed task. Similarly, the cloud management platform further determines such time for the compute node 2. Details are not described herein again.

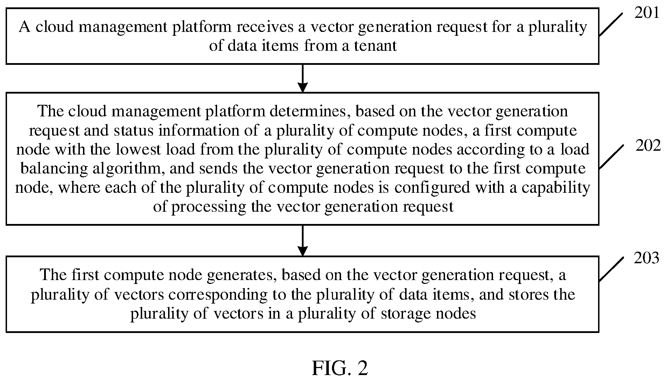

Based on this, for a vector processing request triggered by a tenant, the cloud management platform can determine, based on the vector status table, the vector index status table, and the compute node status table, status information of each compute node that serves the tenant. The cloud management platform can then select, from the plurality of compute nodes that serve the tenant, a compute node in an optimal state (that is, having the lowest load), to execute the vector processing request. In other words, regardless of whether the vector processing request is any one of a vector generation request, a vector query request, a vector addition request, or a vector deletion request, from a perspective of the cloud management platform, functions of the plurality of compute nodes are the same, and each compute node has a capability of executing the vector processing request. Therefore, the cloud management platform may select the compute node in the optimal state from the plurality of compute nodes, to invoke the compute node to execute the vector processing request. It can be learned that, because the cloud management platform has a task scheduling function for the plurality of compute nodes, each compute node may execute various types of vector processing requests, enabling global sharing of resources among the plurality of compute nodes, thereby improving resource utilization and reducing costs of the cloud service system to some extent. To further understand a working procedure of the cloud service system, the following further describes the procedure with reference to a plurality of embodiments. First, a first embodiment is described. The first embodiment is shown in FIG. 2 (FIG. 2 is a schematic flowchart of a vector processing method based on a cloud management platform according to an embodiment of this application). The first embodiment may be implemented by using the cloud service system shown in FIG. 1. The cloud service system includes an infrastructure that provides a cloud service for a tenant and a cloud management platform that manages the infrastructure, the infrastructure includes a plurality of compute nodes and a plurality of storage nodes that serve a tenant, and the plurality of storage nodes are configured to store a plurality of data items of the tenant. The first embodiment includes the following steps.

201: The cloud management platform receives a vector generation request for a plurality of data items from the tenant.

In this embodiment, when the tenant needs to convert the plurality of data items stored in the plurality of storage nodes into a plurality of vectors, the tenant may send the vector generation request for the plurality of data items to the cloud management platform via a client of the tenant. After receiving the vector generation request for the plurality of data items, the cloud management platform may determine that the plurality of data items of the tenant need to be converted into the plurality of vectors.

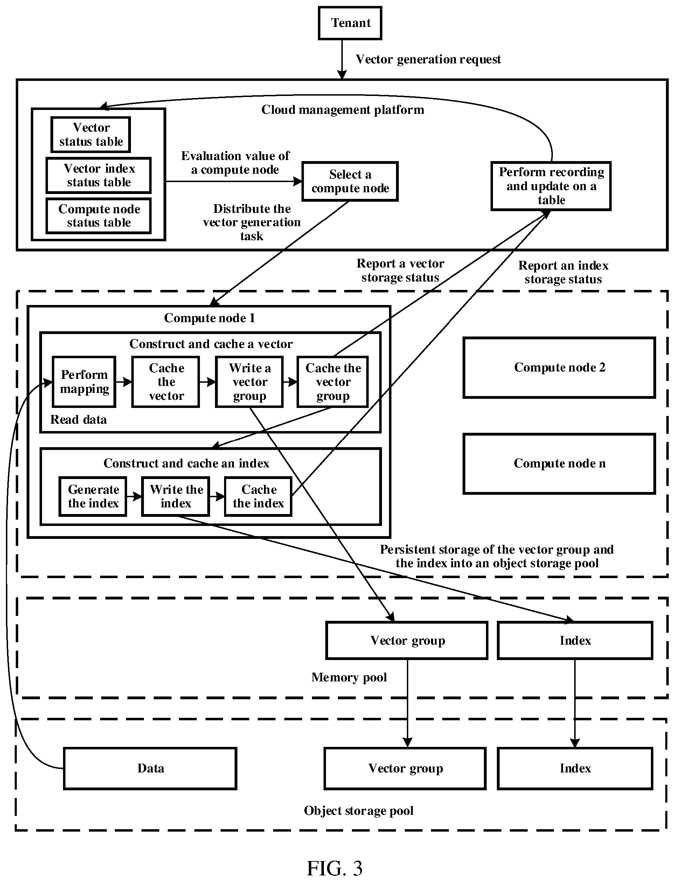

For example, as shown in FIG. 3 (FIG. 3 is a diagram of another structure of a cloud service system according to an embodiment of this application), it is assumed that the tenant has stored a plurality of pieces of (unstructured) data in an object storage pool in advance via the cloud management platform. When the tenant needs to store the plurality of data items in the form of vectors, the tenant may send the vector generation request for the plurality of data items to the cloud management platform.

202: The cloud management platform determines, based on the vector generation request and status information of the plurality of compute nodes, a first compute node with the lowest load from the plurality of compute nodes according to a load balancing algorithm, and sends the vector generation request to the first compute node, where each of the plurality of compute nodes is configured with a capability of processing the vector generation request.

After obtaining the vector generation request for the plurality of data items, the cloud management platform may obtain, based on the vector generation request, a vector status table, a vector index status table, and a compute node status table, the status information of the plurality of compute nodes that serve the tenant, select, from the plurality of compute nodes based on the status information of the plurality of compute nodes and according to the load balancing algorithm, a compute node in an optimal state (that is, having lowest load) as the first compute node, and send the vector generation request to the first compute node. It should be noted that, for any compute node in the plurality of compute nodes, when creating the compute node, the cloud management platform sets the compute node with a capability of processing the vector generation request.

Specifically, the cloud management platform may determine the first compute node from the plurality of compute nodes in the following manner:

After receiving the vector generation request, for any compute node in the plurality of compute nodes that serve the tenant, the cloud management platform may obtain, based on the vector status table, the vector index status table, and the compute node status table, status information of the compute node, such as time required for the compute node to load a vector stored in the compute node (because the compute node does not store any vector group at this time, the time is zero), time required for the compute node to load vectors stored in the plurality of storage nodes (because the plurality of storage nodes do not store any vector group at this time, the time is zero), time required for the compute node to load an index stored in the compute node (because the compute node does not store an index of any vector group at this time, the time is zero), time required for the compute node to load indexes stored in the plurality of storage nodes (because the plurality of storage nodes do not store an index of any vector group at this time, the time is zero), and time required for the compute node to execute the vector generation request. In this case, the cloud management platform may calculate the status information of the compute node according to the load balancing algorithm (there may be a plurality of load balancing algorithms, and this is not limited herein), to obtain an evaluation value of the compute node, and the evaluation value of the compute node indicates a quality degree of a status of the compute node, namely, load of the compute node. A larger evaluation value indicates a worse status of the compute node, namely, higher load of the compute node. A smaller evaluation value indicates a better status of the compute node, namely, lower load of the compute node.

Similarly, for remaining compute nodes other than the compute node in the plurality of compute nodes, the cloud management platform may also perform, on the remaining compute nodes, operations similar to those performed on the compute node. Therefore, the cloud management platform may finally obtain evaluation values of the plurality of compute nodes. In this case, the cloud management platform may determine, from the plurality of compute nodes, a compute node with a smallest evaluation value as the first compute node configured to execute the vector generation request.

Still as in the foregoing example, after receiving the vector generation request, the cloud management platform may consider the vector generation request as a vector generation task, and determine, based on data recorded in the vector status table, the vector index status table, and the compute node status table, time (zero) required for the compute node 1 to load the vector group stored in the compute node 1, time (zero) required for the compute node 1 to load vector groups stored in the plurality of storage nodes, time (zero) required for the compute node 1 to load an index of the vector group stored in the compute node 1, time (zero) required for the compute node 1 to load indexes of the vector groups stored in the plurality of storage nodes, and time required for the compute node 1 to execute the vector generation task. In this case, the cloud management platform may add the five pieces of time (that is, the foregoing load balancing algorithm is performed), to obtain an evaluation value of the compute node 1. Similarly, the cloud management platform may also perform similar operations on remaining compute nodes such as the compute node 2, and therefore, the cloud management platform may finally obtain evaluation values of all of the compute nodes such as the compute node 1 and the compute node 2.

In these compute nodes, because the evaluation value of the compute node 1 is the smallest (which indicates that the compute node 1 has the lowest load and is in an optimal state), the cloud management platform may determine the compute node 1 as a compute node that executes the vector generation task, and schedule the vector generation task to the compute node 1 for execution.

203: The first compute node generates, based on the vector generation request, a plurality of vectors corresponding to the plurality of data items, and stores the plurality of vectors in the plurality of storage nodes.

After obtaining the vector generation request for the plurality of data items, the first compute node may obtain the plurality of data items from the plurality of storage nodes based on the vector generation request, and perform mapping (embedding) on the plurality of data items, to obtain the plurality of vectors corresponding to the plurality of data items. One piece of data may correspond to at least one vector. Then, the first compute node may write the plurality of vectors into the plurality of storage nodes (for example, write the plurality of vectors into an object storage pool via a memory pool, or directly write the plurality of vectors into an object storage pool), so that the plurality of storage nodes store the plurality of vectors, thereby meeting a vector generation requirement of the tenant.

Specifically, the first compute node may store the plurality of vectors in the plurality of storage nodes in the following manner:
After obtaining the vector generation request for the plurality of data items, the first compute node may generate a vector corresponding to a first piece of data, store the vector, generate a vector corresponding to a second piece of data, store the vector, and the like. When a quantity of vectors stored in the first compute node is equal to a preset value (the value may be set based on an actual requirement, and is not limited herein), the first compute node may partition the stored vectors into a vector group, and store the vector group in a storage node in the object storage pool. The foregoing operations are repeatedly performed. The first compute node may convert the plurality of data items into corresponding vectors, and partition the plurality of vectors into a plurality of vector groups, and store the plurality of vector groups in the object storage pool.

Further, each time the first compute node writes a vector group into a storage node in the object storage pool, the first compute node may further generate an index of the vector group, and write the index of the vector group into the storage node in the object storage pool. In this way, the first compute node may write indexes of a plurality of vector groups into the object storage pool.

It should be noted that, each time the first compute node obtains a vector group, the first compute node may choose, according to a preset policy, whether to store the vector group in the first compute node. Regardless of whether the first compute node chooses to store the vector group or chooses not to store the vector group, after the first compute node writes the vector group into the object storage pool, the first compute node may report several vector groups stored in the first compute node to the cloud management platform, so that the cloud management platform updates the vector status table. It should be noted that the first compute node does not store a plurality of vector groups generated by the first compute node, and selectively stores only a part of the plurality of vector groups (namely, a first vector group in a subsequent embodiment, and vectors included in the part of the vector groups are second vectors in the subsequent embodiment). In addition, because a process of writing the vector group into the object storage pool passes through the memory pool, a storage node in the memory pool may also store a part of the plurality of vector groups.

It should be further noted that each time the first compute node obtains an index of a vector group, the first compute node may choose, based on whether the vector group is stored, whether to store the index of the vector group in the first compute node. Regardless of whether the first compute node chooses to store the index of the vector group or chooses not to store the index of the vector group, after the first compute node writes the index of the vector group into the object storage pool, the first compute node may report indexes of several vector groups stored in the first compute node to the cloud management platform, so that the cloud management platform updates the vector index status table. It should be noted that the first compute node selectively stores indexes of only a part of the plurality of vector groups. In addition, because a process of writing the index of the vector group into the object storage pool passes through the memory pool, a storage node in the memory pool may also store indexes of a part of the plurality of vector groups.

Still as in the foregoing example, after receiving the vector generation task, the compute node 1 may read the plurality of data items of the tenant from the object storage pool based on the vector generation task, where the plurality of data items include data 1 to data 36. Then, the compute node 1 may process the data 1 by using a mapping model, to obtain a vector 1 corresponding to the data 1, then process the data 2 to obtain a vector 2 corresponding to the data 2, and the like. Because six vectors may form a vector group, after obtaining a vector 6, the compute node 1 may use the vector 1 to the vector 6 as a vector group 1, and write the vector group 1 into the object storage pool via the memory pool. Then, the compute node 1 may further choose to cache the vector group 1 in the compute node 1, and report, to the cloud management platform, a vector group currently stored in the compute node 1, namely, the vector group 1. Then, the compute node 1 may further generate an index of the vector group 1, and write the index of the vector group 1 into the object storage pool via the memory pool. Then, the compute node 1 may further choose to cache the index of the vector group 1 in the compute node 1, and report, to the cloud management platform, the index of the vector group currently stored in the compute node 1, namely, the index of the vector group 1.

The foregoing operations are repeated. The compute node 1 may continue to generate vectors 7 to 36, namely, a vector group 2 to a vector group 5 and an index of the vector group 2 to an index of the vector group 5, and sequentially write the vector group 2 to the vector group 5 and the index of the vector group 2 to the index of the vector group 5 into the object storage pool. Details are not described herein again. It should be noted that the compute node 1 is designed to cache only three vector groups. According to a preset policy, the compute node 1 chooses to cache the vector group 1, the vector group 2, the vector group 5, and the indexes of the three vector groups, and reports the three vector groups and the indexes of the three vector groups to the cloud management platform in real time. Therefore, the cloud management platform may generate a vector storage status of the compute node 1 in Table 1 and a vector index storage status of the compute node 2 in Table 2.

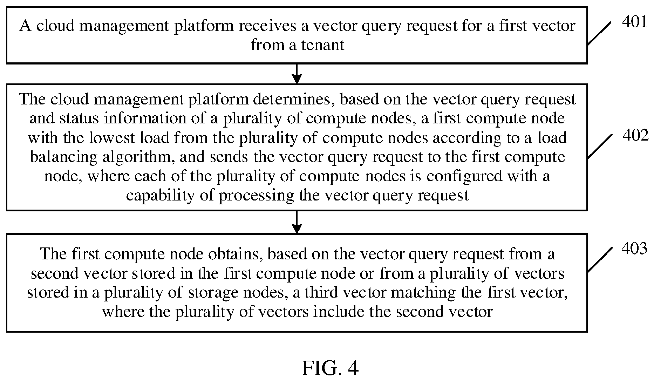

The first embodiment is described above, and a second embodiment is described below. FIG. 4 is another schematic flowchart of a vector processing method based on a cloud management platform according to an embodiment of this application. As shown in FIG. 4, the second embodiment may be implemented by using the cloud service system shown in FIG. 1. The cloud service system includes an infrastructure that provides a cloud service for a tenant and a cloud management platform that manages the infrastructure. The infrastructure includes a plurality of compute nodes and a plurality of storage nodes that serve the tenant, and the plurality of storage nodes are configured to store a plurality of data items of a tenant. The second embodiment includes the following steps.

401: The cloud management platform receives a vector query request for a first vector from the tenant.

In this embodiment, when the tenant needs to query the first vector (namely, a target vector), the tenant may send the vector query request for the first vector to the cloud management platform via a client of the tenant. After receiving the vector query request for the first vector, the cloud management platform may determine the first vector that the tenant needs to query and return the first vector.

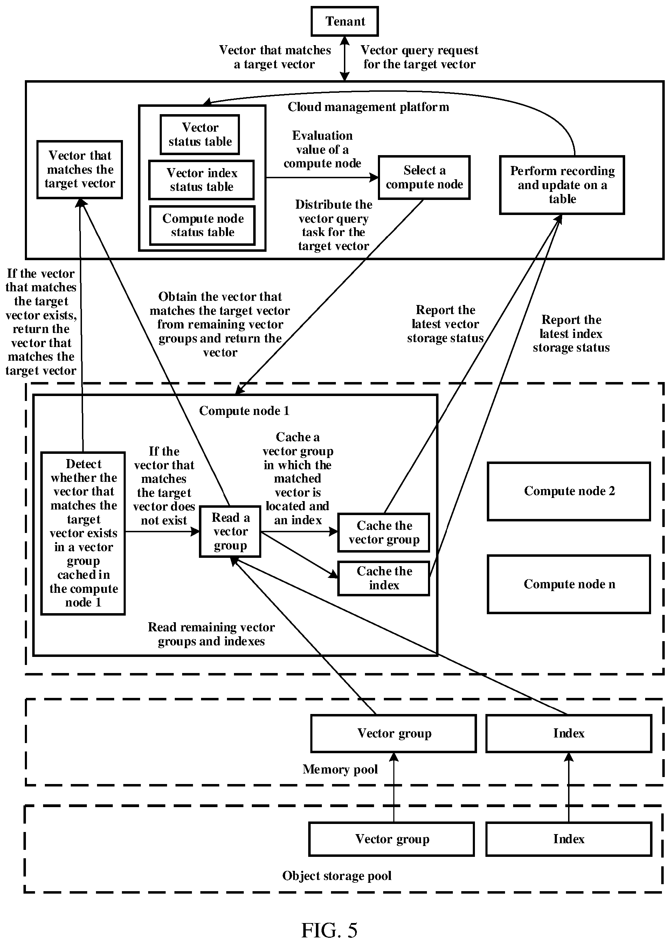

For example, as shown in FIG. 5 (FIG. 5 is a diagram of another structure of a cloud service system according to an embodiment of this application), it is assumed that the tenant needs to query the target vector, and the tenant may send the vector query request for the target vector to the cloud management platform.

402: The cloud management platform determines, based on the vector query request and status information of the plurality of compute nodes, a first compute node with the lowest load from the plurality of compute nodes according to a load balancing algorithm, and sends the vector query request to the first compute node, where each of the plurality of compute nodes is configured with a capability of processing the vector query request.

After obtaining the vector query request for the first vector, the cloud management platform may obtain, based on the vector query request, a vector status table, a vector index status table, and a compute node status table, the status information of the plurality of compute nodes that serve the tenant, and select, from the plurality of compute nodes based on the status information of the plurality of compute nodes, a compute node in an optimal state (that is, having lowest load) according to the load balancing algorithm, for example, the compute node is still a first compute node. Therefore, the cloud management platform may send the vector query request to the first compute node. It should be noted that, for any compute node in the plurality of compute nodes, when creating the compute node, the cloud management platform sets the compute node with a capability of processing the vector query request.

Specifically, the cloud management platform may determine the first compute node from the plurality of compute nodes in the following manner:
After receiving the vector generation request, for any compute node in the plurality of compute nodes that serve the tenant, the cloud management platform may obtain, based on the vector status table, the vector index status table, and the compute node status table, status information of the compute node, such as time required for the compute node to load a vector stored in the compute node (because the compute node generally stores a part of the plurality of vector groups at this time, the time is not zero), time required for the compute node to load vectors stored in the plurality of storage nodes (because the plurality of storage nodes store a plurality of vector groups at this time, the time is not zero), time required for the compute node to load an index stored in the compute node (because the compute node stores indexes of a part of the plurality of vector groups at this time, the time is not zero), time required for the compute node to load indexes stored in the plurality of storage nodes (because the plurality of storage nodes store the indexes of the plurality of vector groups at this time, the time is not zero), and time required for the compute node to execute the vector query request. In this case, the cloud management platform may calculate the status information of the compute node according to the load balancing algorithm, to obtain an evaluation value of the compute node.

Similarly, for remaining compute nodes other than the compute node in the plurality of compute nodes, the cloud management platform may also perform operations similar to those performed on the compute node on the remaining compute nodes. Therefore, the cloud management platform may finally obtain evaluation values of the plurality of compute nodes. In this case, the cloud management platform may select, from the plurality of compute nodes, a compute node with a smallest evaluation value. For example, the compute node is still the first compute node, and the first compute node may execute the vector query request.

Still as in the foregoing example, after receiving the vector query request, the cloud management platform may consider the vector query request as a vector query task, and determine, based on data recorded in the vector status table, the vector index status table, and the compute node status table, time (not zero) required for the compute node 1 to load a vector group stored in the compute node 1, time (not zero) required for the compute node to load vector groups stored in the plurality of storage nodes, time (not zero) required for the compute node 1 to load an index of the vector group stored in the compute node 1, time (not zero) required for the compute node 1 to load indexes of the vector groups stored in the plurality of storage nodes, and time required for the compute node 1 to execute the vector query task. In this case, the cloud management platform may add the five pieces of time to obtain an evaluation value of the compute node 1. Similarly, the cloud management platform may also perform similar operations on remaining compute nodes such as the compute node 2, and therefore, the cloud management platform may finally obtain evaluation values of all of the compute nodes such as the compute node 1 and the compute node 2.

In these compute nodes, because the evaluation value of the compute node 1 is the smallest, the cloud management platform may determine the compute node 1 as a compute node that executes the vector query task, and schedule the vector query task to the compute node 1 for execution.

403: The first compute node obtains, based on the vector query request from a second vector stored in the first compute node or from the plurality of vectors stored in the plurality of storage nodes, a third vector matching the first vector, where the plurality of vectors include the second vector.

After obtaining the vector query request for the first vector, the first compute node may obtain, based on the vector query request from the second vector stored in the first compute node (namely, several vectors stored in the first compute node, and the several vectors are a part of the plurality of vectors stored in the plurality of storage nodes) or the plurality of vectors stored in the plurality of storage nodes, the third vector (namely, an output vector, where the output vector may be the same as or similar to the target vector) matching the first vector, and return the third vector to the tenant for use, thereby meeting the vector query requirement of the tenant.

Specifically, the first compute node may obtain the third vector in the following manner:
It can be learned from the foregoing embodiment that, the several vectors stored in the first compute node may be stored in the form of several vector groups, that is, the second vector stored in the first compute node may be stored in the form of a first vector group, and the first vector group is a part of a plurality of vector groups stored in an object storage pool. In this case, after receiving the vector query request, the first compute node may obtain, based on an index of the first vector group stored in the first compute node, the first vector group stored in the first compute node, and detect, in the first vector group, whether the third vector matching the first vector exists. If the third vector exists, it indicates that the first compute node stores the third vector. Therefore, the first compute node may obtain the third vector from the first vector group, and return the third vector to the tenant. If the third vector does not exist, it indicates that the first compute node does not store the third vector. Therefore, the first compute node may obtain, from a memory pool or the object storage pool, a second vector group other than the first vector group in the plurality of vector groups (namely, a vector group other than the several vector groups stored in the first compute node) and an index of the second vector group, obtain the second vector group based on the index of the second vector group, obtain the third vector from the second vector group, and return the third vector to the tenant.

It should be noted that, when the first compute node does not store the third vector, the first compute node may determine, according to a preset policy from the second vector group, a third vector group in which the third vector is located, and further determine whether to store the third vector group. If the first compute node chooses to store the third vector group, the first compute node may replace, according to the preset policy, a vector group in the several vector groups (namely, the first vector group) stored in the first compute node with the third vector group (certainly, the third vector group may be directly added to the first vector group without replacement), and report, in real time, several vector groups (namely, an updated first vector group) that are newly stored in the first compute node to the cloud management platform, so that the cloud management platform updates the vector status table.

Correspondingly, if the first compute node chooses to store the vector group in which the third vector is located, the first compute node may further replace an index of a vector group in the several vector groups stored in the first compute node with an index of the third vector group in which the third vector is located (certainly, replacement may not be performed), and report, in real time, indexes, of the several vector groups, newly stored in the first compute node (namely, an updated index of the first vector group) to the cloud management platform, so that the cloud management platform updates the vector index status table.

Based on this, for a compute node other than the first compute node in the plurality of compute nodes, once the compute node also executes another vector query request, the compute node stores several vector groups and corresponding indexes. Details are not described herein.

Still as in the foregoing example, after the vector query task is obtained, because the compute node 1 caches a vector group 1, a vector group 2, and a vector group 5, when a vector 8 matches the target vector required by the tenant, the vector 8 is located in the vector group 2. Therefore, the compute node 1 may read the vector 8 from the vector group 2 cached in the compute node 1, and return the vector 8 to the tenant. When a vector 12 matches the target vector required by the tenant, the vector 12 is located in the vector group 3. Therefore, the compute node 1 may read the vector group 3, a vector group 4, a vector group 6, and corresponding indexes from the memory pool or the object storage pool, to obtain the vector 12 from the vector group 3, and then return the vector 12 to the tenant.

In addition, when the compute node 1 does not cache the vector group 3 in which the vector 12 is located, the compute node 1 may choose, according to the preset policy, whether to cache the vector group 3. If the compute node 1 chooses to cache the vector group 3, the compute node 1 may select, according to the preset policy, the vector group 3 to replace the vector group 5 stored in the compute node 1, and replace an index of the vector group 5 stored in the compute node 1 with the index of the vector group 3. In this case, the compute node 1 caches the vector group 1, the vector group 2, the vector group 3, and corresponding indexes. Therefore, the compute node 1 may report the latest vector storage status and index storage status to the cloud management platform in real time, so that the cloud management platform updates the vector status table and the vector index status table.

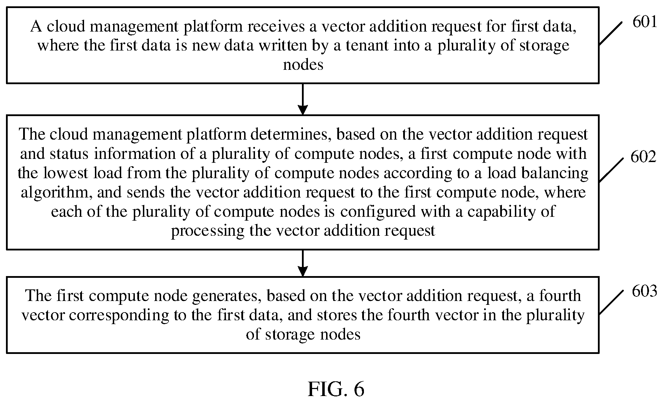

The second embodiment is described above, and a third embodiment is described below. FIG. 6 is another schematic flowchart of a vector processing method based on a cloud management platform according to an embodiment of this application. As shown in FIG. 6, the third embodiment may be implemented by using the cloud service system shown in FIG. 1. The cloud service system includes an infrastructure that provides a cloud service for a tenant and a cloud management platform that manages the infrastructure. The infrastructure includes a plurality of compute nodes and a plurality of storage nodes that serve the tenant, and the plurality of storage nodes are configured to store a plurality of data items of the tenant. The third embodiment includes the following steps.

601: The cloud management platform receives a vector addition request for first data, where the first data is new data written by the tenant into the plurality of storage nodes.

In this embodiment, when the tenant writes new data, namely, the first data, into the plurality of storage nodes, the plurality of storage nodes may be triggered to send the vector addition request for the first data to the cloud management platform. After receiving the vector addition request for the first data, the cloud management platform may determine that the first data needs to be converted into a fourth vector (namely, a new vector).

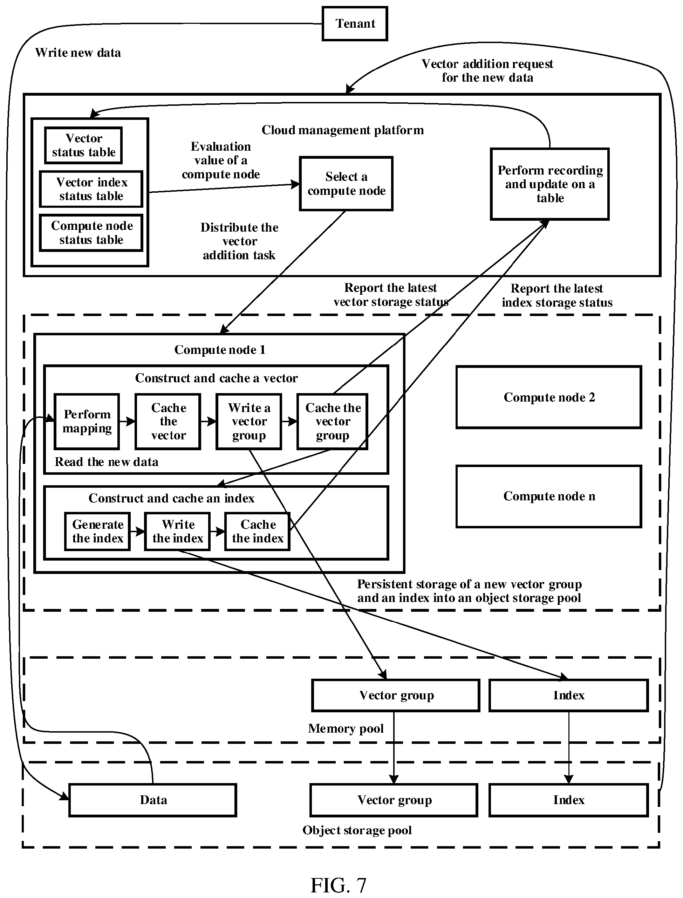

For example, as shown in FIG. 7 (FIG. 7 is a diagram of another structure of a cloud service system according to an embodiment of this application), it is assumed that the tenant writes the new data into an object storage pool, and the object storage pool is triggered to send the vector addition request for the new data to the cloud management platform.

602: The cloud management platform determines, based on the vector addition request and status information of the plurality of compute nodes, a first compute node with the lowest load from the plurality of compute nodes according to a load balancing algorithm, and sends the vector addition request to the first compute node, where each of the plurality of compute nodes is configured with a capability of processing the vector addition request.

After obtaining the vector addition request for the first data, the cloud management platform may obtain, based on the vector addition request, a vector status table, a vector index status table, and a compute node status table, the status information of the plurality of compute nodes that serve the tenant, and select, from the plurality of compute nodes based on the status information of the plurality of compute nodes, a compute node in an optimal state (that is, having lowest load) according to the load balancing algorithm, for example, the compute node is still the first compute node. Therefore, the cloud management platform may send the vector addition request to the first compute node. It should be noted that, for any compute node in the plurality of compute nodes, when creating the compute node, the cloud management platform sets the compute node with a capability of processing the vector addition request.

For a description of step 602, refer to a related description part of step 402 in the embodiment shown in FIG. 4. Details are not described herein again.

603: The first compute node generates, based on the vector addition request, the fourth vector corresponding to the first data, and stores the fourth vector in the plurality of storage nodes.

After obtaining the vector addition request for the first data, the first compute node may obtain the first data from the plurality of storage nodes based on the vector addition request, and map the first data, to obtain the fourth vector corresponding to the first data. Then, the first compute node may store the fourth vector in the plurality of storage nodes, to automatically meet the vector addition requirement of the tenant.

Specifically, the first compute node may write the fourth vector into the plurality of storage nodes in the following manner:
After receiving the vector addition request, the first compute node may read the first data from the object storage pool, map the first data to obtain the fourth vector corresponding to the first data, and store the fourth vector. In this case, the first compute node determines whether a quantity of vectors (including the fourth vector) that are stored in the first compute node and are not partitioned into a vector group is equal to preset data. If the quantity is equal to the preset data, the first compute node may partition these vectors into a fourth vector group (a new vector group), and write the fourth vector group into the object storage pool.

Further, the first compute node may further generate an index of the fourth vector group, and write the index of the fourth vector group into the object storage pool.

It should be noted that, the first compute node may determine, according to a preset policy, whether to store the fourth vector group. If the first compute node chooses to store the fourth vector group, the first compute node may replace, according to the preset policy, a vector group in several vector groups (namely, a first vector group) stored in the first compute node with the fourth vector group (certainly, replacement may not be performed), and report, to the cloud management platform in real time, several vector groups (namely, an updated first vector group) stored in the first compute node, so that the cloud management platform updates the vector status table.

Correspondingly, the first compute node may further replace an index of a vector group in the several vector groups stored in the first compute node with an index of the fourth vector group (certainly, replacement may not be performed), and report, in real time, indexes, of the several vector groups, newly stored in the first compute node (namely, an updated index of the first vector group) to the cloud management platform, so that the cloud management platform updates the vector index status table.

Still as in the foregoing example, after the vector addition task is obtained, the compute node 1 may read new data from the object storage pool, map the new data, to obtain a new vector, and cache the new vector. Because the compute node 1 caches some vectors (including the previous new vectors) that are not partitioned into a vector group, when a quantity of these vectors is equal to a preset value, the compute node 1 may partition these vectors into a new vector group, namely, a vector group 7, and write the vector group 7 into the object storage pool. Then, the compute node 1 may further generate an index of the vector group 7, and write the index of the vector group 7 into the object storage pool.

In addition, the compute node 1 may choose, according to the preset policy, whether to cache the vector group 7. If the compute node 1 chooses to cache the vector group 7, the compute node 1 may select, according to the preset policy, the vector group 7 to replace a vector group 5 stored in the compute node 1, and replace an index of the vector group 5 stored in the compute node 1 with the index of the vector group 7. In this case, the compute node 1 caches the vector group 1, a vector group 2, the vector group 7, and corresponding indexes. Therefore, the compute node 1 may report to the cloud management platform in real time, so that the cloud management platform updates the vector status table and the vector index status table.

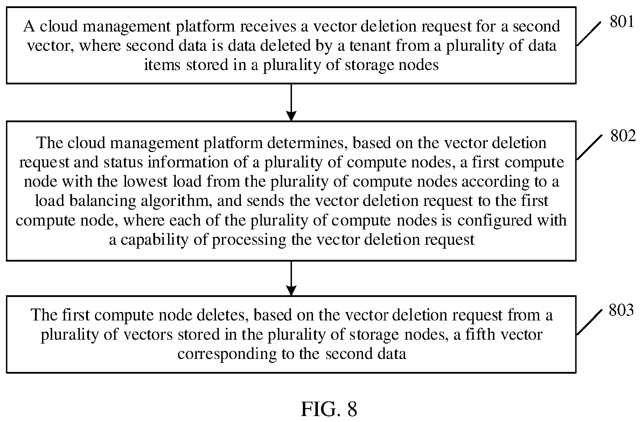

The third embodiment is described above, and a fourth embodiment is described below. FIG. 8 is another schematic flowchart of a vector processing method based on a cloud management platform according to an embodiment of this application. As shown in FIG. 8, the fourth embodiment may be implemented by using the cloud service system shown in FIG. 1. The cloud service system includes an infrastructure that provides a cloud service for a tenant and a cloud management platform that manages the infrastructure. The infrastructure includes a plurality of compute nodes and a plurality of storage nodes that serve the tenant, and the plurality of storage nodes are configured to store a plurality of data items of the tenant. The fourth embodiment includes the following steps.

801: The cloud management platform receives a vector deletion request for a second vector, where second data is data deleted by the tenant from a plurality of data items stored in the plurality of storage nodes.

In this embodiment, when the tenant deletes a piece of data, namely, the second data, from the plurality of data items stored in the plurality of storage nodes, the plurality of storage nodes may be triggered to send the vector deletion request for the second data to the cloud management platform. After receiving the vector deletion request for the second data, the cloud management platform may determine that a fifth vector (namely, a to-be-deleted vector) corresponding to the second data needs to be deleted.

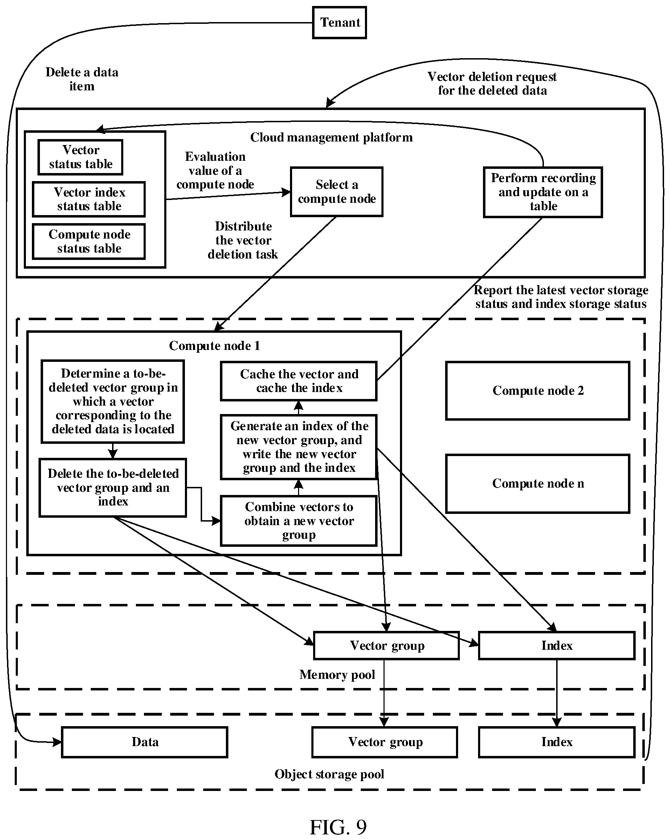

For example, as shown in FIG. 9 (FIG. 9 is a diagram of another structure of a cloud service system according to an embodiment of this application), it is assumed that the tenant deletes the data from an object storage pool, and the object storage pool is triggered to send the vector deletion request for the deleted data to the cloud management platform.

802: The cloud management platform determines, based on the vector deletion request and status information of the plurality of compute nodes, a first compute node with the lowest load from the plurality of compute nodes according to a load balancing algorithm, and sends the vector deletion request to the first compute node, where each of the plurality of compute nodes is configured with a capability of processing the vector deletion request.

After obtaining the vector deletion request for the second data, the cloud management platform may obtain, based on the vector deletion request, a vector status table, a vector index status table, and a compute node status table, the status information of the plurality of compute nodes that serve the tenant, and select, from the plurality of compute nodes based on the status information of the plurality of compute nodes, a compute node in an optimal state (that is, having lowest load) according to the load balancing algorithm, for example, the compute node is still the first compute node. Therefore, the cloud management platform may send the vector deletion request to the first compute node. It should be noted that, for any compute node in the plurality of compute nodes, when creating the compute node, the cloud management platform sets the compute node with a capability of processing the vector deletion request.

For a description of step 802, refer to a related description part of step 402 in the embodiment shown in FIG. 4. Details are not described herein again.

803: The first compute node deletes, based on the vector deletion request from the plurality of vectors stored in the plurality of storage nodes, a fifth vector corresponding to the second data.

After obtaining the vector deletion request for the second data, the first compute node may determine, based on the vector deletion request from the plurality of vectors stored in the plurality of storage nodes, the fifth vector corresponding to the second data, and delete the fifth vector.

Specifically, the first compute node may delete the fifth vector in the following manner:
After receiving the vector deletion request, the first compute node may determine, from the plurality of vector groups stored in the object storage pool, a fifth vector group (namely, a to-be-deleted vector group) in which the fifth vector corresponding to the second data is located, and delete the fifth vector group. Before the deletion, the first compute node may read a sixth vector other than the fifth vector in the fifth vector group (namely, a vector other than the to-be-deleted vector in the to-be-deleted vector group). Then, the first compute node may generate a sixth vector group (a new vector group) based on the sixth vector. For example, the first compute node may combine the sixth vector and remaining vectors (these vectors may be vectors that are stored in the first compute node and are not partitioned into a vector group), to obtain a sixth vector group. Then, the first compute node may write the sixth vector group into the object storage pool.

Further, the first compute node may further generate an index of the sixth vector group, and write the index of the sixth vector group into the object storage pool.

It should be noted that, the first compute node may determine, according to a preset policy, whether to store the sixth vector group. If the first compute node chooses to store the sixth vector group, the first compute node may replace, according to the preset policy, a vector group in several vector groups (namely, the first vector group) stored in the first compute node with the sixth vector group (certainly, replacement may not be performed), and report, to the cloud management platform in real time, several vector groups (namely, an updated first vector group) newly stored in the first compute node, so that the cloud management platform updates the vector status table.

Correspondingly, the first compute node may further replace an index of a vector group in the several vector groups stored in the first compute node with an index of the sixth vector group (certainly, replacement may not be performed), and report, in real time, indexes, of the several vector groups, newly stored in the first compute node (namely, an updated index of the first vector group) to the cloud management platform, so that the cloud management platform updates the vector index status table.

Still as in the foregoing example, after obtaining the vector deletion task, the compute node 1 may determine, from a vector group 1 to a vector group 6 in the object storage pool, that a vector 31 corresponding to the deleted data is located in the vector group 6 (the to-be-deleted vector group), and the compute node 1 may delete the vector group 6 from the object storage pool, and cache vectors 32 to 36. Because the compute node 1 further caches other vectors that are not partitioned into a vector group, the compute node 1 may select a vector from the vectors and combine the vector with the vectors 32 to 36 to obtain a new vector group, namely, a vector group 8. Then, the compute node 1 may further generate an index of the vector group 8. Then, the compute node 1 may store the vector group 8 and an index of the vector group 8 in the object storage pool.

In addition, the compute node 1 may choose, according to the preset policy, whether to cache the vector group 8. If the compute node 1 chooses to cache the vector group 8, the compute node 1 may select, according to the preset policy, the vector group 8 to replace a vector group 5 stored in the compute node 1, and replace an index of the vector group 5 stored in the compute node 1 with the index of the vector group 8. In this case, the compute node 1 caches the vector group 1, a vector group 2, the vector group 8, and corresponding indexes. Therefore, the compute node 1 may report to the cloud management platform in real time, so that the cloud management platform updates the vector status table and the vector index status table.

In embodiments of this application, for a vector processing request triggered by a tenant, a cloud management platform may obtain status information of compute nodes that serve the tenant, and select, based on the status information, a compute node in an optimal state from the plurality of compute nodes to execute the vector processing request. Regardless of whether the vector processing request is any one of a vector generation request, a vector query request, a vector addition request, or a vector deletion request, from a perspective of the cloud management platform, functions of the plurality of compute nodes are the same, and each compute node may execute the vector processing request. Therefore, the cloud management platform may select the compute node in the optimal state from the plurality of compute nodes, to invoke the compute node to execute the vector processing request. It can be learned that, because the cloud management platform has a task scheduling function for the plurality of compute nodes, each compute node may execute various types of vector processing requests, enabling global sharing of resources among the plurality of compute nodes, thereby improving resource utilization and reducing costs of the cloud service system to some extent.

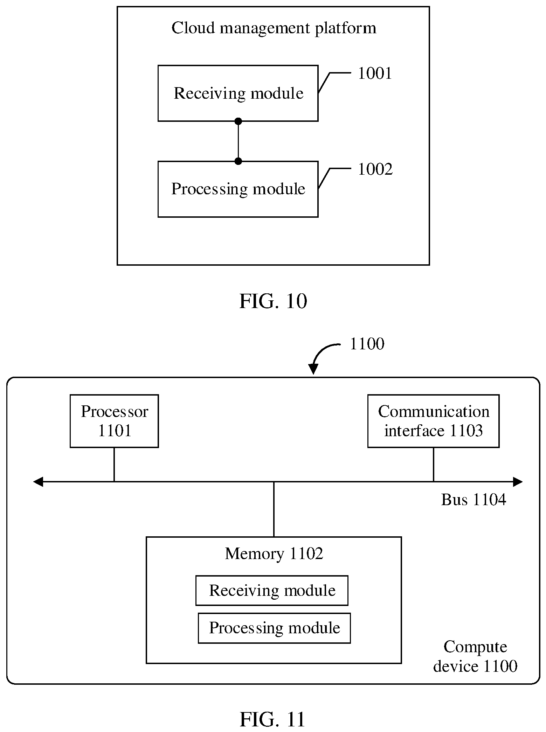

The foregoing is detailed descriptions of the vector processing method based on the cloud management platform provided in embodiments of this application. The following describes the cloud management platform provided in embodiments of this application. FIG. 10 is a diagram of a structure of a cloud management platform according to an embodiment of this application. As shown in FIG. 10, the cloud management platform is configured to manage an infrastructure that provides a cloud service, the infrastructure includes a plurality of compute nodes and a plurality of storage nodes, the plurality of storage nodes are configured to store a plurality of data items of a tenant, and the cloud management platform includes:
a receiving module 1001, configured to receive a vector generation request for the plurality of data items from the tenant; and
a processing module 1002, configured to determine, based on the vector generation request and status information of the plurality of compute nodes, a first compute node with the lowest load from the plurality of compute nodes according to a load balancing algorithm, where each of the plurality of compute nodes is configured with a capability of processing the vector generation request.

The processing module 1002 is further configured to send the vector generation request to the first compute node, where the vector generation request indicates the first compute node to generate a plurality of vectors corresponding to the plurality of data items, and to store the plurality of vectors in the plurality of storage nodes.

In a possible implementation, the receiving module 1001 is further configured to receive a vector query request for a first vector from the tenant; and the processing module 1002 is further configured to determine, based on the vector query request and the status information of the plurality of compute nodes, the first compute node with the lowest load from the plurality of compute nodes according to the load balancing algorithm, where each of the plurality of compute nodes is configured with a capability of processing the vector query request. The processing module 1002 is further configured to send the vector query request to the first compute node, where the vector query request indicates the first compute node to obtain, from a second vector stored in the first compute node or from the plurality of vectors stored in the plurality of storage nodes, a third vector matching the first vector, and the plurality of vectors include the second vector.

In a possible implementation, the receiving module 1001 is further configured to receive a vector addition request for first data, where the first data is new data written by the tenant into the plurality of storage nodes; and the processing module 1002 is further configured to determine, based on the vector addition request and the status information of the plurality of compute nodes, the first compute node with the lowest load from the plurality of compute nodes according to the load balancing algorithm, where each of the plurality of compute nodes is configured with a capability of processing the vector addition request. The processing module 1002 is further configured to send the vector addition request to the first compute node, where the vector addition request indicates the first compute node to generate a fourth vector corresponding to the first data, and to store the fourth vector in the plurality of storage nodes.

In a possible implementation, the receiving module 1001 is further configured to receive a vector deletion request for second data, where the second data is data deleted by the tenant from the plurality of data items stored in the plurality of storage nodes; and the processing module 1002 is further configured to determine, based on the vector deletion request and the status information of the plurality of compute nodes, the first compute node with the lowest load from the plurality of compute nodes according to the load balancing algorithm, where each of the plurality of compute nodes is configured with a capability of processing the vector deletion request. The processing module 1002 is further configured to send the vector deletion request to the first compute node, where the vector deletion request indicates the first compute node to delete, from the plurality of vectors stored in the plurality of storage nodes, a fifth vector corresponding to the second data.

In a possible implementation, the vector addition request or the vector deletion request originates from the plurality of storage nodes.

In a possible implementation, the vector generation request indicates: the first compute node to partition the plurality of vectors into a plurality of vector groups, where a quantity of vectors included in each vector group is equal to a preset value; and the first compute node to write, in units of a vector group, the plurality of vector groups into the plurality of storage nodes respectively.

In a possible implementation, the second vector is stored in the first compute node in the form of a first vector group, and the vector generation request indicates: the first compute node, after obtaining the plurality of vector groups, to select the first vector group from the plurality of vector groups, and to store the first vector group; and the first compute node to notify the cloud management platform that the first compute node stores the first vector group.

In a possible implementation, the second vector is stored in the first compute node in the form of a first vector group, and the vector query request indicates: the first compute node to detect whether the third vector matching the first vector exists in the first vector group; and the first compute node, if the third vector exists in the first vector group, to obtain the third vector from the first vector group; or the first compute node, if the third vector does not exist in the first vector group, to obtain, from the plurality of storage nodes, a second vector group other than the first vector group in a plurality of vector groups, and to obtain the third vector from the second vector group, where the plurality of vector groups are obtained by partitioning the plurality of vectors.

In a possible implementation, the second vector is stored in the first compute node in the form of the first vector group, and the vector query request further indicates: the first compute node to determine, from the second vector group, a third vector group in which the third vector is located, and to update the first vector group based on the third vector group to obtain an updated first vector group, where the updated first vector group includes the third vector group; and the first compute node to notify the cloud management platform that the first compute node stores the updated first vector group.

In a possible implementation, the vector addition request indicates: the first compute node to generate the fourth vector corresponding to the first data, and to store the fourth vector; and the first compute node, if a quantity of vectors that are stored in the first compute node and are not partitioned into a vector group is equal to a preset value, to partition the vectors that are not partitioned into the vector group into a fourth vector group, and to write the fourth vector group into the plurality of storage nodes, where the vectors that are not partitioned into the vector group include the fourth vector.

In a possible implementation, the second vector is stored in the first compute node in the form of a first vector group, and the vector addition request further indicates: the first compute node to update the first vector group based on the fourth vector group to obtain an updated first vector group, where the updated first vector group includes the fourth vector group; and the first compute node to notify the cloud management platform that the first compute node stores the updated first vector group.

In a possible implementation, the plurality of vectors are stored in the plurality of storage nodes in the form of a plurality of vector groups, and the vector deletion request indicates: the first compute node to obtain, from the plurality of vector groups stored in the plurality of storage nodes, a fifth vector group in which the fifth vector corresponding to the second data is located, and to delete the fifth vector group from the plurality of vector groups stored in the plurality of storage nodes; and the first compute node to generate a sixth vector group based on a sixth vector other than the fifth vector in the fifth vector group, and to store the sixth vector group in the plurality of storage nodes.

In a possible implementation, the vector deletion request further indicates: the first compute node to update the first vector group based on the sixth vector group to obtain an updated first vector group, where the updated first vector group includes the sixth vector group; and the first compute node to notify the cloud management platform that the first compute node stores the updated first vector group.

In a possible implementation, the processing module is configured to: calculate, based on the vector generation request and according to the load balancing algorithm, the status information of the plurality of compute nodes to obtain evaluation values of the plurality of compute nodes, where the evaluation values of the plurality of compute nodes indicate load of the plurality of compute nodes; and determine, from the plurality of compute nodes, a compute node with a smallest evaluation value as the first compute node. For any compute node in the plurality of compute nodes, the status information of the compute node includes at least one of the following: time required for the compute node to load a vector stored in the compute node, time required for the compute node to load an index of the vector stored in the compute node, time required for the compute node to load vectors stored in the plurality of storage nodes, time required for the compute node to load indexes of the vectors stored in the plurality of storage nodes, and time required for the compute node to execute the vector processing request.

In a possible implementation, the cloud management platform further includes an analysis module. The analysis module is configured to perform at least one of the following: analyzing the vector stored in the compute node and the vectors stored in the plurality of storage nodes to obtain the time required for the compute node to load the vector stored in the compute node and the time required for the compute node to load the vectors stored in the plurality of storage nodes; analyzing the index of the vector stored in the compute node and the indexes of the vectors stored in the plurality of storage nodes to obtain the time required for the compute node to load the index stored in the compute node and the time required for the compute node to load the indexes stored in the plurality of storage nodes; and analyzing resource usage of the compute node to obtain the time required for the compute node to execute the vector processing request.

It should be noted that, content such as information exchange between the modules/units of the foregoing apparatus and an implementation process is based on the same concept as the method embodiment of this application, and produces the same technical effects as those of the method embodiment of this application. For specific content, refer to the foregoing descriptions in the method embodiment of embodiments of this application. Details are not described herein again.

FIG. 11 is a diagram of a structure of a compute device according to an embodiment of this application. As shown in FIG. 11, the compute device 1100 (which may be configured to present the foregoing cloud management platform) includes a processor 1101, a memory 1102, a communication interface 1103, and a bus 1104. The processor 1101, the memory 1102, and the communication interface 1103 are coupled through a bus (not marked in the figure). The memory 1102 stores instructions. When executable instructions in the memory 1102 are executed, the compute device 1100 performs the method performed by the cloud management platform in the foregoing method embodiment.

The compute device 1100 may be one or more integrated circuits configured to implement the foregoing method, for example, one or more application specific integrated circuits (application specific integrated circuit, ASIC), one or more microprocessors (digital signal processor, DSP), one or more field programmable gate arrays (field programmable gate array, FPGA), or a combination of at least two of these integrated circuit forms. For another example, when the unit in the apparatus is implemented in the form of scheduling a program by the processing element, the processing element may be a general-purpose processor, for example, a central processing unit (central processing unit, CPU) or another processor that may invoke the program. For still another example, the units may be integrated and implemented in the form of a system-on-a-chip (system-on-a-chip, SOC).

The processor 1101 may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

The memory 1102 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 1102 stores executable program code. The processor 1101 executes the executable program code to separately implement functions of modules such as the foregoing receiving module and the processing module, to implement the foregoing vector processing method based on the cloud management platform. In other words, the memory 1102 stores instructions for performing the foregoing vector processing method based on the cloud management platform.

The communication interface 1103 uses a transceiver module, for example, but not limited to, a network interface card or a transceiver, to implement communication between the compute device 1100 and another device or a communication network.

The bus 1104 may include a power bus, a control bus, a status signal bus, and the like, in addition to a data bus. The bus may be a peripheral component interconnect express (peripheral component interconnect express, PCIe) bus, an extended industry standard architecture (extended industry standard architecture, EISA) bus, a unified bus (unified bus, Ubus, or UB), a compute express link (compute express link, CXL), a cache coherent interconnect for accelerators (cache coherent interconnect for accelerators, CCIX), or the like. Buses may be classified into an address bus, a data bus, a control bus, and the like.

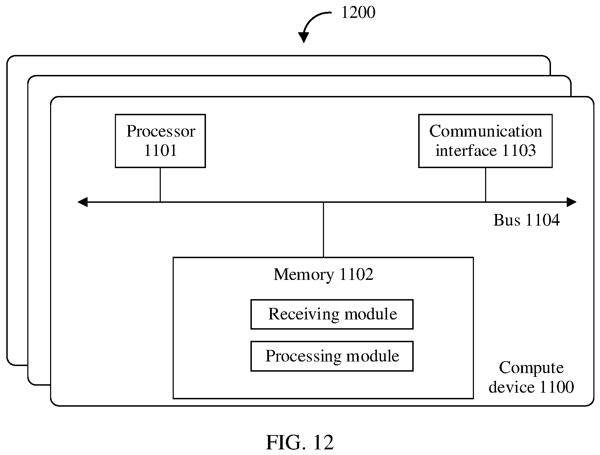

FIG. 12 is a diagram of a structure of a compute device cluster according to an embodiment of this application. As shown in FIG. 12, the compute device cluster 1200 includes at least one compute device 1100.

As shown in FIG. 12, the compute device cluster 1200 includes at least one compute device 1100. A memory 1102 in the one or more compute devices 1100 in the compute device cluster 1200 may store same instructions for performing the foregoing vector processing method based on the cloud management platform.

In some possible implementations, the memory 1102 in the one or more compute devices 1100 in the compute device cluster 1200 may alternatively separately store a part of instructions for performing the foregoing vector processing method based on the cloud management platform. In other words, a combination of the one or more compute devices 1100 may jointly perform the foregoing vector processing method based on the cloud management platform.

It should be noted that memories 1102 in different compute devices 1100 in the compute device cluster 1200 may store different instructions, to separately perform some functions of the foregoing cloud management platform. In other words, the instructions stored in the memories 1102 in the different compute devices 1100 may be used to implement functions of one or more of modules such as the receiving module and the processing module.

In some possible implementations, the one or more compute devices 1100 in the compute device cluster 1200 may be connected through a network. The network may be a wide area network, a local area network, or the like.

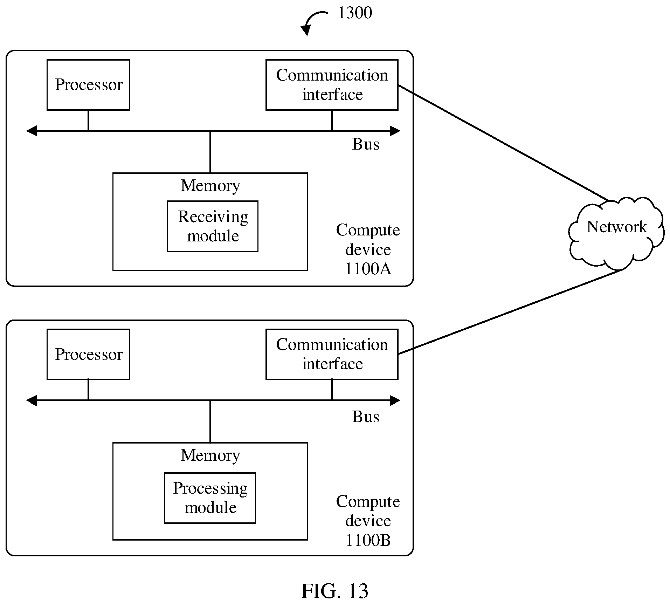

FIG. 13 is a diagram in which computer devices in a computer cluster are connected through a network according to an embodiment of this application. As shown in FIG. 13, two compute devices 1100A and 1100B are connected through a network. Specifically, each compute device is connected to the network through a communication interface in the compute device.

In a possible implementation, a memory in the compute device 1100A stores instructions for performing functions of modules such as the receiving module. In addition, the memory in the compute device 1100B stores instructions for performing functions of modules such as the processing module.

It should be understood that functions of the compute device 1100A shown in FIG. 13 may alternatively be completed by a plurality of compute devices. Similarly, functions of the compute device 1100B may alternatively be completed by a plurality of compute devices.

An embodiment of this application further relates to a computer storage medium. The computer-readable storage medium stores a program used for signal processing. When the program is run on a computer, the computer is enabled to perform the steps performed by the cloud management platform in the embodiment shown in FIG. 2, FIG. 4, FIG. 6, or FIG. 8.

An embodiment of this application further relates to a computer program product. The computer program product stores instructions. When the instructions are executed by a computer, the computer is enabled to perform the steps in the embodiment shown in FIG. 2, FIG. 4, FIG. 6, or FIG. 8.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, apparatus, and method may be implemented in other manners. For example, the apparatus embodiments described above are merely examples. For example, the unit division is merely logical function division, and there may be another division manner in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in the form of hardware, or may be implemented in the form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in the form of a software product. The computer software product is stored in a storage medium and includes several instructions for instructing a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A vector processing method based on a cloud management platform, wherein the cloud management platform is configured to manage an infrastructure that provides a cloud service, the infrastructure comprises a plurality of compute nodes and a plurality of storage nodes, the plurality of storage nodes are configured to store a plurality of data items of a tenant, and the method comprises:
receiving, by the cloud management platform, a vector generation request for the plurality of data items from the tenant;
determining, by the cloud management platform based on the vector generation request and status information of the plurality of compute nodes, a first compute node with lowest load from the plurality of compute nodes according to a load balancing algorithm, wherein each of the plurality of compute nodes is configured with a capability of processing the vector generation request; and
sending, by the cloud management platform, the vector generation request to the first compute node, wherein the vector generation request indicates the first compute node to generate a plurality of vectors corresponding to the plurality of data items, and to store the plurality of vectors in the plurality of storage nodes.

2. The method according to claim 1, wherein the method further comprises:
receiving, by the cloud management platform, a vector query request for a first vector from the tenant;
determining, by the cloud management platform based on the vector query request and the status information of the plurality of compute nodes, the first compute node with the lowest load from the plurality of compute nodes according to the load balancing algorithm, wherein each of the plurality of compute nodes is configured with a capability of processing the vector query request; and
sending, by the cloud management platform, the vector query request to the first compute node, wherein the vector query request indicates the first compute node to obtain, from a second vector stored in the first compute node or from the plurality of vectors stored in the plurality of storage nodes, a third vector matching the first vector, and the plurality of vectors comprise the second vector.

3. The method according to claim 1 or 2, wherein the method further comprises:
receiving, by the cloud management platform, a vector addition request for first data, wherein the first data is new data written by the tenant into the plurality of storage nodes;
determining, by the cloud management platform based on the vector addition request and the status information of the plurality of compute nodes, the first compute node with the lowest load from the plurality of compute nodes according to the load balancing algorithm, wherein each of the plurality of compute nodes is configured with a capability of processing the vector addition request; and
sending, by the cloud management platform, the vector addition request to the first compute node, wherein the vector addition request indicates the first compute node to generate a fourth vector corresponding to the first data, and to store the fourth vector in the plurality of storage nodes.

4. The method according to any one of claims 1 to 3, wherein the method further comprises:
receiving, by the cloud management platform, a vector deletion request for second data, wherein the second data is data deleted by the tenant from the plurality of data items stored in the plurality of storage nodes;
determining, by the cloud management platform based on the vector deletion request and the status information of the plurality of compute nodes, the first compute node with the lowest load from the plurality of compute nodes according to the load balancing algorithm, wherein each of the plurality of compute nodes is configured with a capability of processing the vector deletion request; and
sending, by the cloud management platform, the vector deletion request to the first compute node, wherein the vector deletion request indicates the first compute node to delete, from the plurality of vectors stored in the plurality of storage nodes, a fifth vector corresponding to the second data.

5. The method according to claim 3 or 4, wherein the vector addition request or the vector deletion request originates from the plurality of storage nodes.

6. The method according to any one of claims 1 to 5, wherein the vector generation request indicates:
the first compute node to partition the plurality of vectors into a plurality of vector groups, wherein a quantity of vectors comprised in each vector group is equal to a preset value; and
the first compute node to write, in units of a vector group, the plurality of vector groups into the plurality of storage nodes respectively.

7. The method according to claim 6, wherein the second vector is stored in the first compute node in the form of a first vector group, and the vector generation request further indicates:
the first compute node, after obtaining the plurality of vector groups, to select the first vector group from the plurality of vector groups, and to store the first vector group; and
the first compute node to notify the cloud management platform that the first compute node stores the first vector group.

8. The method according to claim 2, wherein the second vector is stored in the first compute node in the form of a first vector group, and the vector query request indicates:
the first compute node to detect whether the third vector matching the first vector exists in the first vector group; and
the first compute node, if the third vector exists in the first vector group, to obtain the third vector from the first vector group; or
the first compute node, if the third vector does not exist in the first vector group, to obtain, from the plurality of storage nodes, a second vector group other than the first vector group in a plurality of vector groups, and to obtain the third vector from the second vector group, wherein the plurality of vector groups are obtained by partitioning the plurality of vectors.

9. The method according to claim 8, wherein the second vector is stored in the first compute node in the form of the first vector group, and the vector query request further indicates:
the first compute node to determine, from the second vector group, a third vector group in which the third vector is located, and to update the first vector group based on the third vector group to obtain an updated first vector group, wherein the updated first vector group comprises the third vector group; and
the first compute node to notify the cloud management platform that the first compute node stores the updated first vector group.

10. The method according to claim 3, wherein the vector addition request indicates:
the first compute node to generate the fourth vector corresponding to the first data, and to store the fourth vector; and
the first compute node, if a quantity of vectors that are stored in the first compute node and are not partitioned into a vector group is equal to a preset value, to partition the vectors that are not partitioned into the vector group into a fourth vector group, and to write the fourth vector group into the plurality of storage nodes, wherein the vectors that are not partitioned into the vector group comprise the fourth vector.

11. The method according to claim 10, wherein the second vector is stored in the first compute node in the form of a first vector group, and the vector addition request further indicates:
the first compute node to update the first vector group based on the fourth vector group to obtain an updated first vector group, wherein the updated first vector group comprises the fourth vector group; and
the first compute node to notify the cloud management platform that the first compute node stores the updated first vector group.

12. The method according to claim 4, wherein the plurality of vectors are stored in the plurality of storage nodes in the form of a plurality of vector groups, and the vector deletion request indicates:
the first compute node to obtain, from the plurality of vector groups stored in the plurality of storage nodes, a fifth vector group in which the fifth vector corresponding to the second data is located, and to delete the fifth vector group from the plurality of vector groups stored in the plurality of storage nodes; and
the first compute node to generate a sixth vector group based on a sixth vector other than the fifth vector in the fifth vector group, and to store the sixth vector group in the plurality of storage nodes.

13. The method according to claim 12, wherein the vector deletion request further indicates:
the first compute node to update a first vector group based on the sixth vector group to obtain an updated first vector group, wherein the updated first vector group comprises the sixth vector group; and
the first compute node to notify the cloud management platform that the first compute node stores the updated first vector group.

14. The method according to any one of claims 1 to 13, wherein determining, by the cloud management platform based on the vector generation request and the status information of the plurality of compute nodes, the first compute node with the lowest load from the plurality of compute nodes according to the load balancing algorithm comprises:
calculating, by the cloud management platform based on the vector generation request and according to the load balancing algorithm, the status information of the plurality of compute nodes, to obtain evaluation values of the plurality of compute nodes, wherein the evaluation values of the plurality of compute nodes indicate load of the plurality of compute nodes; and
determining, by the cloud management platform from the plurality of compute nodes, a compute node with a smallest evaluation value as the first compute node, wherein
for any compute node in the plurality of compute nodes, the status information of the compute node comprises at least one of the following: time required for the compute node to load a vector stored in the compute node, time required for the compute node to load an index of the vector stored in the compute node, time required for the compute node to load vectors stored in the plurality of storage nodes, time required for the compute node to load indexes of the vectors stored in the plurality of storage nodes, and time required for the compute node to execute a vector processing request.

15. The method according to claim 14, wherein the method further comprises at least one of the following:
analyzing, by the cloud management platform, the vector stored in the compute node and the vectors stored in the plurality of storage nodes to obtain the time required for the compute node to load the vector stored in the compute node and the time required for the compute node to load the vectors stored in the plurality of storage nodes;
analyzing, by the cloud management platform, the index of the vector stored in the compute node and the indexes of the vectors stored in the plurality of storage nodes to obtain the time required for the compute node to load the index stored in the compute node and the time required for the compute node to load the indexes stored in the plurality of storage nodes; and
analyzing, by the cloud management platform, resource usage of the compute node to obtain the time required for the compute node to execute the vector processing request.

16. A cloud management platform, wherein the cloud management platform is configured to manage an infrastructure that provides a cloud service, the infrastructure comprises a plurality of compute nodes and a plurality of storage nodes, the plurality of storage nodes are configured to store a plurality of data items of a tenant, and the cloud management platform comprises:
a receiving module, configured to receive a vector generation request for the plurality of data items from the tenant; and
a processing module, configured to determine, based on the vector generation request and status information of the plurality of compute nodes, a first compute node with lowest load from the plurality of compute nodes according to a load balancing algorithm, wherein each of the plurality of compute nodes is configured with a capability of processing the vector generation request; and
the processing module is further configured to send the vector generation request to the first compute node, wherein the vector generation request indicates the first compute node to generate a plurality of vectors corresponding to the plurality of data items, and to store the plurality of vectors in the plurality of storage nodes.

17. The cloud management platform according to claim 16, wherein the receiving module is further configured to receive a vector query request for a first vector from the tenant;
the processing module is further configured to determine, based on the vector query request and the status information of the plurality of compute nodes, the first compute node with the lowest load from the plurality of compute nodes according to the load balancing algorithm, wherein each of the plurality of compute nodes is configured with a capability of processing the vector query request; and
the processing module is further configured to send the vector query request to the first compute node, wherein the vector query request indicates the first compute node to obtain, from a second vector stored in the first compute node or from the plurality of vectors stored in the plurality of storage nodes, a third vector matching the first vector, and the plurality of vectors comprise the second vector.

18. The cloud management platform according to claim 16 or 17, wherein the receiving module is further configured to receive a vector addition request for first data, wherein the first data is new data written by the tenant into the plurality of storage nodes;
the processing module is further configured to determine, based on the vector addition request and the status information of the plurality of compute nodes, the first compute node with the lowest load from the plurality of compute nodes according to the load balancing algorithm, wherein each of the plurality of compute nodes is configured with a capability of processing the vector addition request; and
the processing module is further configured to send the vector addition request to the first compute node, wherein the vector addition request indicates the first compute node to generate a fourth vector corresponding to the first data, and to store the fourth vector in the plurality of storage nodes.

19. The cloud management platform according to any one of claims 16 to 18, wherein the receiving module is further configured to receive a vector deletion request for second data, wherein the second data is data deleted by the tenant from the plurality of data items stored in the plurality of storage nodes;
the processing module is further configured to determine, based on the vector deletion request and the status information of the plurality of compute nodes, the first compute node with the lowest load from the plurality of compute nodes according to the load balancing algorithm, wherein each of the plurality of compute nodes is configured with a capability of processing the vector deletion request; and
the processing module is further configured to send the vector deletion request to the first compute node, wherein the vector deletion request indicates the first compute node to delete, from the plurality of vectors stored in the plurality of storage nodes, a fifth vector corresponding to the second data.

20. The cloud management platform according to claim 18 or 19, wherein the vector addition request or the vector deletion request originates from the plurality of storage nodes.

21. The cloud management platform according to any one of claims 16 to 20, wherein the processing module is configured to:
calculating, based on the vector generation request and according to the load balancing algorithm, the status information of the plurality of compute nodes, to obtain evaluation values of the plurality of compute nodes, wherein the evaluation values of the plurality of compute nodes indicate load of the plurality of compute nodes; and
determine, from the plurality of compute nodes, a compute node with a smallest evaluation value as the first compute node, wherein
for any compute node in the plurality of compute nodes, the status information of the compute node comprises at least one of the following: time required for the compute node to load a vector stored in the compute node, time required for the compute node to load an index of the vector stored in the compute node, time required for the compute node to load vectors stored in the plurality of storage nodes, time required for the compute node to load indexes of the vectors stored in the plurality of storage nodes, and time required for the compute node to execute the vector processing request.

22. The cloud management platform according to claim 21, wherein the cloud management platform further comprises an analysis module, and the analysis module is configured to perform at least one of the following:
analyzing the vector stored in the compute node and the vectors stored in the plurality of storage nodes to obtain the time required for the compute node to load the vector stored in the compute node and the time required for the compute node to load the vectors stored in the plurality of storage nodes;
analyzing the index of the vector stored in the compute node and the indexes of the vectors stored in the plurality of storage nodes to obtain the time required for the compute node to load the index stored in the compute node and the time required for the compute node to load the indexes stored in the plurality of storage nodes; and
analyzing resource usage of the compute node to obtain the time required for the compute node to execute the vector processing request.

23. A compute device cluster, wherein the compute device cluster comprises at least one compute device, and each compute device comprises a processor and a memory, wherein
the memory is configured to store instructions; and
the processor is configured to enable, according to the instructions, the compute device cluster to perform the method according to any one of claims 1 to 15.

24. A computer storage medium, wherein the computer storage medium stores one or more instructions, and when the instructions are executed by one or more computers, the one or more computers are enabled to perform the method according to any one of claims 1 to 15.

25. A computer program product, wherein the computer program product stores instructions, and when the instructions are executed by a computer, the computer is enabled to perform the method according to any one of claims 1 to 15.
